# EUROPEAN PATENT SPECIFICATION

(11) **EP 4 064 039 B1**
(45) Date of publication and mention of the grant of the patent: **19.06.2024**
(21) Application number: 20905681.1
(22) Date of filing: 22.12.2020
(51) Int. Cl.: G06F 8/65

(54) **OTA SYSTEM SOFTWARE UPGRADE CONTROL METHOD AND TERMINAL DEVICE**
VERFAHREN ZUR STEUERUNG DES SOFTWARE-UPGRADES FÜR EIN OTA-SYSTEM UND ENDGERÄT
PROCÉDÉ DE COMMANDE DE MISE À NIVEAU DE LOGICIEL SYSTÈME OTA ET DISPOSITIF TERMINAL

(30) Priority: 24.12.2019 CN 201911350143
(43) Date of publication of application: 28.09.2022
(73) Proprietor: Huawei Technologies Co., Ltd., Shenzhen, Guangdong 518129, (CN)
(72) Inventor: HE, Chaohui, Shenzhen, Guangdong 518129 (CN); ZHANG, Zhenqi, Shenzhen, Guangdong 518129 (CN); CHEN, Xiaodong, Shenzhen, Guangdong 518129 (CN)
(74) Representative: Pfenning, Meinig & Partner mbB
(86) International application number: PCT/CN2020/138303
(87) International publication number: WO 2021/129610

(56) References cited:
- CN-A- 102 970 342
- CN-A- 107 147 519
- CN-A- 110 347 411
- US-A1- 2019 187 971
- US-B2- 8 849 717

## Description

### TECHNICAL FIELD

Embodiments of this application relate to the communications field, and in particular, to an OTA system software upgrade control method, a terminal device, a computer-readable storage medium and a computer program product.

### BACKGROUND

Currently, in the system upgrade field, over the air (Over The Air, OTA) is a process of completing upgrade locally over a network, and is different from a conventional process of connecting to a PC to perform firmware flashing. In OTA of an intelligent terminal, some firmware (which is program code fixed in an integrated circuit, is responsible for controlling and coordinating functions of the integrated circuit, and is equivalent to a BIOS of a main board) of the intelligent terminal such as a mobile phone may be upgraded. In an OTA technology, a terminal device usually detects whether a system software upgrade package, that is, a software package that can be used by the terminal device to upgrade system software, exists on an OTA server. If the terminal device detects a system software upgrade package, the terminal device notifies a user that the system software can be upgraded, and downloads the upgrade package from the OTA server end and upgrades the system software with the user's permission.

In an enterprise application scenario, system software upgrade may cause enterprise-dedicated software or a customized application or function on a terminal device to be incompatible with an upgraded system version. Therefore, an enterprise usually manages and controls system software upgrade in consideration of security and reliability of the terminal device.

In the conventional technology, a manner in which the enterprise controls system software upgrade is usually as follows: An upgrade server is established in the enterprise, a preset upgrade policy runs in the upgrade server, and the upgrade server may determine, according to the upgrade policy, whether a software upgrade version on the OTA can be used by a terminal device in the enterprise, and perform downloading based on a determining result. That is, in the enterprise, after the upgrade server determines, according to the preset upgrade policy, that the terminal device in the enterprise is allowed to use an upgrade package on the OTA server, the upgrade server obtains the upgrade package from the OTA server end. When the terminal device requests the upgrade package from the upgrade server, the upgrade server sends the upgrade package to the terminal device.

However, for a small-sized enterprise, costs of deploying an enterprise-dedicated upgrade server are high, and formulation of an upgrade policy and subsequent maintenance of the upgrade server require a large amount of labor costs and funds. For example, the upgrade server needs to be deployed in a dedicated equipment room, a cloud service needs to be purchased, and professional IT personnel are required to maintain and manage the upgrade server. However, the foregoing costs are unacceptable to a small-sized enterprise that has only several terminal devices (for example, a small-sized enterprise with fewer than 50 employees).

Therefore, how to provide a complete, easy-to-deploy, and low-cost OTA system software upgrade control manner becomes an urgent problem to be resolved.

US 2019/0187971 A1 discloses methods and systems for providing secure over-the-air firmware updates to one or more vehicles.

### SUMMARY

This application provides an OTA system software upgrade control method according to claim 1, a terminal device according to claim 7, a computer-readable storage medium according to claim 12 and a computer program product according to claim 13, to reduce complexity and investment costs of an OTA upgrade system to some extent.

To achieve the foregoing objectives, this application uses the following technical solutions.

According to a first aspect, embodiments of this application provide an OTA system software upgrade control method. The method includes: A terminal device accesses an OTA server, and obtains version information of a target system software upgrade package that is on the OTA server and whose version is later than a current system software version of the terminal device. Then, the terminal device may request, from a management device, authorization information corresponding to the version information of the target system software upgrade package, to verify whether the target system software upgrade package can be downloaded from the OTA server. Specifically, the terminal device determines, in response to the authorization information that is received from the management device and that corresponds to the version information of the target system software upgrade package, that the target system software upgrade package can be obtained from the OTA server, and obtains the target system software upgrade package from the OTA server. The authorization information indicates whether the terminal device is allowed to obtain the target system software upgrade package from the OTA server.

According to the foregoing implementation, the terminal device can directly obtain the target system software upgrade package from the OTA server when the authorization information issued by the management device indicates that the terminal device is allowed to obtain the target system software upgrade package from the OTA server, and the management device does not need to download and store the target system software upgrade package from the OTA server. Therefore, a simple and convenient upgrade manner and an OTA upgrade management network with a simple network layout are provided.

In a possible implementation, that the terminal device determines, in response to the authorization information that is received from the management device and that corresponds to the version information of the target system software upgrade package, that the target system software upgrade package can be obtained from the OTA server includes: The terminal device receives the authorization information that is sent by the management device and that corresponds to the version information of the target system software upgrade package; and if the authorization information includes an availability mark, determines that the authorization information corresponding to the version information of the target system software upgrade package indicates that the terminal device is allowed to obtain the target system software upgrade package from the OTA server.

According to the foregoing implementation, the management device can store only version information and corresponding authorization information, that is, mark each piece of version information, to reduce device pressure on the management device. Optionally, the management device may send, to the terminal device based on a request of the terminal, the version information that is of the target system software upgrade package and that is requested by the terminal device and the authorization information corresponding to the version information. After obtaining the authorization information, the terminal may determine, through verification, whether the terminal is authorized to download the target system software upgrade package, and perform a subsequent operation based on a verification result.

In a possible implementation, that the terminal device determines, in response to the authorization information that is received from the management device and that corresponds to the version information of the target system software upgrade package, that the target system software upgrade package can be obtained from the OTA server includes: The terminal device receives version information of at least one system software upgrade package and authorization information corresponding to the version information of the at least one system software upgrade package that are sent by the management device. The terminal device matches the version information of the target system software upgrade package against the version information of the at least one system software upgrade package, and determines authorization information corresponding to successfully matched version information of a system software upgrade package. If the authorization information includes an availability mark, the terminal device determines that the authorization information corresponding to the version information of the target system software upgrade package indicates that the terminal device is allowed to obtain the target system software upgrade package from the OTA server.

According to the foregoing implementation, the management device can store only version information and corresponding authorization information, that is, mark each piece of version information, to reduce device pressure on the management device. Optionally, the management device may return, based on a request of the terminal device, all version information and corresponding authorization information stored on the management device to the terminal device. After obtaining the authorization information, the terminal may determine, through verification, whether the terminal is authorized to download the target system software upgrade package, and perform a subsequent operation based on a verification result.

In a possible implementation, that the terminal device determines, in response to the authorization information that is received from the management device and that corresponds to the version information of the target system software upgrade package, that the target system software upgrade package can be obtained from the OTA server includes: The terminal device receives a response message sent by the management device; and if the response message includes the version information of the target system software upgrade package, determines that the authorization information corresponding to the version information of the target system software upgrade package indicates that the terminal device is allowed to obtain the target system software upgrade package from the OTA server.

According to the foregoing implementation, the management device can store only version information that is authorized for use, to reduce device pressure on the management device. Optionally, the management device may perform verification based on a request of the terminal device. If the version information of the target system software upgrade package exists on the management device, the management device returns the version information of the target system software upgrade package to the terminal device, to indicate that the version information has been authorized for use.

In a possible implementation, that the terminal device requests, from a management device, authorization information corresponding to the version information of the target system software upgrade package includes: The terminal device sends a query request message to the management device, where the query request message includes the version information of the target system software upgrade package.

According to the foregoing implementation, the terminal can query the version information of the target system software upgrade package at the management device end, and does not need to obtain the target system software upgrade package from the management device, to reduce device load and deployment difficulty on the management device.

In a possible implementation, that the terminal device determines, in response to the authorization information that is received from the management device and that corresponds to the version information of the target system software upgrade package, that the target system software upgrade package can be obtained from the OTA server, and obtains the target system software upgrade package from the OTA server includes: If the terminal device determines, in response to the authorization information that is received from the management device and that corresponds to the version information of the target system software upgrade package, that the authorization information indicates that the terminal device is allowed to obtain the target system software upgrade package from the OTA server, the terminal device determines that the target system software upgrade package can be obtained from the OTA server, and obtains the target system software upgrade package from the OTA server. If the terminal device determines, in response to the authorization information that is received from the management device and that corresponds to the version information of the target system software upgrade package, that the authorization information indicates that the terminal device is not allowed to obtain the target system software upgrade package from the OTA server, the terminal device determines that the target system software upgrade package cannot be obtained from the OTA server, and determines that an OTA upgrade procedure ends.

According to the foregoing implementation, when the terminal device determines that the target system software upgrade package cannot be obtained from the OTA server, the terminal device (which may be specifically an application, a tool, or a program in the terminal device) may interrupt the upgrade procedure, to end the upgrade procedure.

In a possible implementation, before the terminal device requests, from the management device, the authorization information corresponding to the version information of the target system software upgrade package, the method further includes: The terminal device requests, from the management device, to join a group managed by the management device.

According to the foregoing implementation, the terminal device can be bound with the management device to join a same management group, so that the management device can manage the terminal device in the group.

In a possible implementation, that the terminal device requests, from the management device, to join a group managed by the management device includes: The terminal device sends identification information of the terminal device to the management device; and if an acknowledgment message sent by the management device is received, the terminal device determines that the terminal device has joined the group.

According to the foregoing implementation, the terminal device can be bound with the management device to join a same management group, so that the management device can manage the terminal device in the group.

According to a second aspect, embodiments of this application provide a terminal device, including a memory and a processor. The memory is coupled to the processor, and the memory stores program instructions, and when the program instructions are executed by the processor, the terminal device is enabled to perform the following steps: accessing an OTA server, and obtaining version information of a target system software upgrade package that is on the OTA server and whose version is later than a current system software version of the terminal device; requesting, from a management device, authorization information corresponding to the version information of the target system software upgrade package; and determining, in response to the authorization information that is received from the management device and that corresponds to the version information of the target system software upgrade package, that the target system software upgrade package can be obtained from the OTA server, and obtaining the target system software upgrade package from the OTA server, where the authorization information indicates whether the terminal device is allowed to obtain the target system software upgrade package from the OTA server.

In a possible implementation, when the program instructions are executed by the processor, the terminal device is enabled to perform the following steps: receiving the authorization information that is sent by the management device and that corresponds to the version information of the target system software upgrade package; and if the authorization information includes an availability mark, determining that the authorization information corresponding to the version information of the target system software upgrade package indicates that the terminal device is allowed to obtain the target system software upgrade package from the OTA server.

In a possible implementation, when the program instructions are executed by the processor, the terminal device is enabled to perform the following steps: receiving version information of at least one system software upgrade package and authorization information corresponding to the version information of the at least one system software upgrade package that are sent by the management device; matching the version information of the target system software upgrade package against version information of the at least one system software upgrade package, and determining authorization information corresponding to successfully matched version information of a system software upgrade package; and if the authorization information includes an availability mark, determining that the authorization information corresponding to the version information of the target system software upgrade package indicates that the terminal device is allowed to obtain the target system software upgrade package from the OTA server.

In a possible implementation, when the program instructions are executed by the processor, the terminal device is enabled to perform the following steps: receiving a response message sent by the management device; and if the response message includes the version information of the target system software upgrade package, determining that the authorization information corresponding to the version information of the target system software upgrade package indicates that the terminal device is allowed to obtain the target system software upgrade package from the OTA server.

In a possible implementation, when the program instructions are executed by the processor, the terminal device is enabled to perform the following step: sending a query request message to the management device, where the query request message includes the version information of the target system software upgrade package.

In a possible implementation, when the program instructions are executed by the processor, the terminal device is enabled to perform the following steps: if it is determined, in response to the authorization information that is received from the management device and that corresponds to the version information of the target system software upgrade package, that the authorization information indicates that the terminal device is allowed to obtain the target system software upgrade package from the OTA server, determining that the target system software upgrade package can be obtained from the OTA server, and obtaining the target system software upgrade package from the OTA server; or if it is determined, in response to the authorization information that is received from the management device and that corresponds to the version information of the target system software upgrade package, that the authorization information indicates that the terminal device is not allowed to obtain the target system software upgrade package from the OTA server, determining that the target system software upgrade package cannot be obtained from the OTA server, and determining that an OTA upgrade procedure ends.

In a possible implementation, when the program instructions are executed by the processor, the terminal device is enabled to perform the following step: requesting, from the management device, to join a group managed by the management device.

In a possible implementation, when the program instructions are executed by the processor, the terminal device is enabled to perform the following steps: sending identification information of the terminal device to the management device; and if an acknowledgment message sent by the management device is received, determining that the terminal device has joined the group.

According to a third aspect, embodiments of this application provide a computer-readable medium, configured to store a computer program. The computer program includes instructions for performing the method according to any one of the first aspect or the possible implementations of the first aspect.

According to a fourth aspect, embodiments of this application provide a computer program. The computer program includes instructions for performing the method according to any one of the first aspect or the possible implementations of the first aspect.

### BRIEF DESCRIPTION OF DRAWINGS

FIG. 1 is a schematic diagram of a communications system according to an embodiment of this application;
FIG. 2 is a schematic diagram of a structure of an example of a mobile phone;
FIG. 3 is a schematic flowchart of an OTA system software upgrade control method according to an embodiment of this application;
FIG. 4 is a schematic flowchart of an example of an OTA system software upgrade control method;
FIG. 5 is a schematic diagram of an example of a system software upgrade scenario;
FIG. 6A and FIG. 6B are a schematic flowchart of an example of an OTA system software upgrade control method;
FIG. 7 is a schematic flowchart of an example of an OTA system software upgrade control method;
FIG. 8 is a schematic flowchart of an example of an OTA system software upgrade control method;
FIG. 9 is a schematic diagram of a structure of a management device according to an embodiment of this application;
FIG. 10 is a schematic diagram of a structure of a terminal device according to an embodiment of this application; and
FIG. 11 is a schematic diagram of a structure of an apparatus according to an embodiment of this application.

### DESCRIPTION OF EMBODIMENTS

The following clearly describes the technical solutions in embodiments of this application with reference to the accompanying drawings in embodiments of this application. Clearly, the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in the embodiments of this application, the terms "first", "second", and the like are intended to distinguish between different objects but do not indicate a particular order of the objects. For example, a first target object, a second target object, and the like are intended to distinguish between different target objects but do not indicate a particular order of the target objects.

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In the description of embodiments of this application, unless otherwise stated, "a plurality of' means two or more than two. For example, a plurality of processing units are two or more processing units. A plurality of systems are two or more systems.

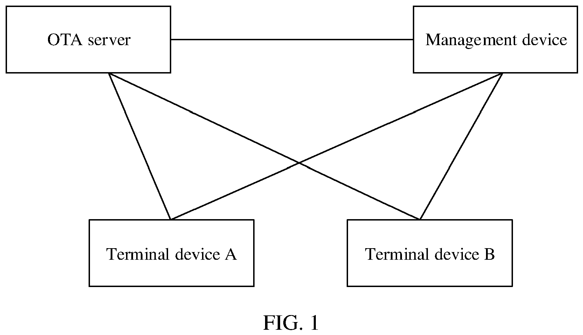

Before the technical solutions in embodiments of this application are described, a communications system in embodiments of this application is first described with reference to the accompanying drawings. FIG. 1 is a schematic diagram of a communications system according to an embodiment of this application. The communications system includes an OTA server, a terminal device A, a terminal device B, and a management device.

It should be noted that, during actual application, one management device may be usually set (a manner of setting the management device is described in the following embodiment) in an enterprise or another organization, and the management device may be configured to control system software upgrade on one or more terminal devices in the enterprise. In addition, the management device may be connected to one or more OTA servers, and the plurality of OTA servers may be configured to provide system software upgrade packages for corresponding systems or terminal devices. Optionally, different system software, for example, Android, and different terminal device manufacturers may correspond to different OTA servers. Each terminal device may be connected to a corresponding OTA server, to download a system software upgrade package from the OTA server end. It should be further noted that quantities of devices in FIG. 1 are merely examples, and there may be one or more OTA servers, management devices, and terminal devices.

Still refer to FIG. 1. In this application, an example in which a terminal device cluster belongs to an enterprise A, that is, all terminal devices are terminal devices used by enterprise employees is used for detailed description.

In a specific implementation process of embodiments of this application, the terminal device may be a personal computer, a smartphone, a tablet computer, a vehicle-mounted apparatus, a smart appliance, an artificial intelligence device, or the like. Optionally, the management device may alternatively be a terminal device, for example, any device that can be configured to perform the solutions in this application, such as a smartphone or a tablet computer.

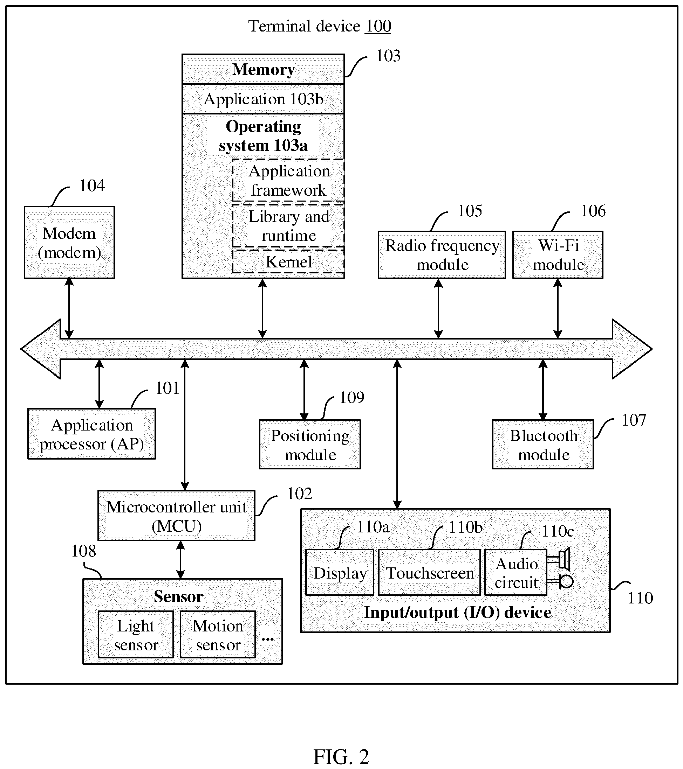

FIG. 2 is a schematic diagram of a structure of an example of a terminal device that is a mobile phone. According to FIG. 2, a mobile phone 100 includes components such as an application processor 101, a microcontroller unit (microcontroller unit, MCU) 102, a memory 103, a modem (modem) 104, a radio frequency (radio frequency, RF) module 105, a wireless fidelity (Wireless-Fidelity, Wi-Fi for short) module 106, a Bluetooth module 107, a sensor 108, a positioning module 109, and an input/output (input/output, I/O) device 110. These components can communicate with each other through one or more communications buses or signal cables. A person skilled in the art may understand that a hardware structure shown in FIG. 2 does not constitute a limitation on the mobile phone, and the mobile phone 100 may include more or fewer components than those shown in the figure, or some components may be combined, or different component configurations may be used.

The following describes each component of the terminal device 100 in detail with reference to FIG. 2.

The application processor 101 is a control center of the mobile phone 100, and is connected to the components of the terminal device 100 through various interfaces and various buses. In some embodiments, the processor 101 may include one or more processing units.

The memory 103 stores a computer program, such as an operating system 103a and an application 103b shown in FIG. 2. The application processor 101 is configured to execute the computer program in the memory 103, to implement a function defined by the computer program. For example, the application processor 101 executes the operating system 103a to implement various functions of the operating system on the terminal device 100. The memory 103 further stores data other than the computer program, such as data generated during running of the operating system 103a and the application 103b, for example, a system software upgrade package in embodiments of this application. The memory 103 is a non-volatile storage medium, and usually includes an internal memory and an external memory. The internal memory includes but is not limited to a random access memory (Random Access Memory, RAM), a read-only memory (Read-Only Memory, ROM), a cache (cache), or the like. The external memory includes but is not limited to a flash memory (flash memory), a hard disk, a compact disc, a universal serial bus (universal serial bus, USB) flash drive, and the like. The computer program is usually stored in the external memory. Before executing the computer program, the processor loads the program from the external memory to the memory.

The memory 103 may be independent, and is connected to the application processor 101 through a bus. Alternatively, the memory 103 and the application processor 101 may be integrated into a chip subsystem.

The MCU 102 is a coprocessor configured to obtain and process data from the sensor 108. A processing capability and power consumption of the MCU 102 are lower than those of the application processor 101, but the MCU 102 has a feature of "always on (always on)", and can continuously collect and process the data from the sensor when the application processor 101 is in a sleep mode, to ensure normal running of the sensor with relatively low power consumption. In an embodiment, the MCU 103 may be a sensor hub chip. The sensor 108 may include an optical sensor and a motion sensor. Specifically, the optical sensor may include an ambient light sensor and a proximity sensor. The ambient light sensor may adjust luminance of a display 110a based on ambient light intensity. The proximity sensor may power off the display when the mobile phone 100 is moved to an ear. As a type of motion sensor, an accelerometer sensor may detect values of accelerations in various directions (usually three axes), and may detect values and directions of gravity when the accelerometer sensor is still. The sensor 108 may further include another sensor such as a gyroscope, a barometer, a hygrometer, a thermometer, or an infrared sensor. Details are not described herein. The MCU 102 and the sensor 108 may be integrated into a same chip, or may be separate components and are connected through a bus.

The modem 104 and the radio frequency module 105 constitute a communications subsystem of the mobile phone 100, and are configured to implement main functions of a wireless communication standard protocol such as 3GPP or ETSI. The modem 104 is configured to perform encoding/decoding, signal modulation/demodulation, equalization, and the like. The radio frequency module 105 is configured to receive and send a radio signal, and the radio frequency module 105 includes but is not limited to an antenna, at least one amplifier, a coupler, a duplexer, and the like. The radio frequency module 105 cooperates with the modem 104 to implement a wireless communication function. The modem 104 may be used as an independent chip, or may be combined with another chip or circuit to form a system-level chip or an integrated circuit. These chips or integrated circuits may be used in all terminal devices that implement the wireless communication function, including a mobile phone, a computer, a notebook computer, a tablet computer, a router, a wearable device, a vehicle, a household appliance, and the like.

The mobile phone 100 may further perform wireless communication by using a Wi-Fi module 106, a Bluetooth module 107, or the like. The Wi-Fi module 106 is configured to provide, for the mobile phone 100, network access that complies with a Wi-Fi related standard protocol. The mobile phone 100 may access a Wi-Fi access point by using the Wi-Fi module 106, to access the internet. In some other embodiments, the Wi-Fi module 106 may alternatively be used as a Wi-Fi wireless access point, and may provide Wi-Fi network access for another terminal device. The Bluetooth module 107 is configured to implement short-range communication between the mobile phone 100 and another terminal device (for example, a mobile phone or a smartwatch). The Wi-Fi module 106 in embodiments of this application may be an integrated circuit, a Wi-Fi chip, or the like, and the Bluetooth module 107 may be an integrated circuit, a Bluetooth chip, or the like.

The positioning module 109 is configured to determine a geographical location of the terminal device 100. The Wi-Fi module 106, the Bluetooth module 107, and the positioning module 198 may be independent chips or integrated circuits, or may be integrated together.

The input/output device 110 includes but is not limited to the display 110a, a touchscreen 110b, an audio circuit 110c, and the like.

The display (also referred to as a display screen) 110a is configured to display information input by a user or information displayed to a user. The touchscreen 110b may cover the display 110a. After detecting a touch event, the touchscreen 110b transmits the touch event to the application processor 101 to determine a type of the touch event, and then the application processor 101 may provide a corresponding visual output on the display 110a based on the type of the touch event.

Further, the operating system 103a used in the mobile phone 100 may be iOS°, Android°, Microsoft°, or another operating system. This is not limited in embodiments of this application.

A specific implementation solution of this application is described below with reference to the schematic diagram of the application scenario shown in FIG. 2.

Specifically, in this application, an example of an application scenario in which the terminal device cluster in FIG. 1 belongs to an enterprise A is used for description. In this application, a management device is set in the enterprise A, and the management device may obtain version information on an OTA server, that is, version information of a system software upgrade package. In this application, the management device may authenticate and authorize version information of each system software upgrade package on the OTA server, to manage whether upgrade can be performed on one or more terminal devices in the enterprise based on a system software upgrade package on the OTA server, and the management device can manage and control OTA upgrade without downloading a system software upgrade package. In addition, the management device in this application may be any terminal device, such as a mobile phone or a tablet computer, that can perform the method in this application. Therefore, a system layout is effectively simplified, and an OTA system software upgrade control method with a simple implementation is provided.

Specifically, in this application, the management device may manage and control system software upgrade on terminal devices in the enterprise in different management manners. Details are as follows:

In a possible implementation, after obtaining the version information of each system software upgrade package on the OTA server, the management device may mark the version information. The marking is to indicate whether each terminal device in the enterprise is allowed to perform upgrade based on a system software version. For details, refer to Scenario 1.

In a possible implementation, after obtaining the version information of each system software upgrade package on the OTA server, the management device may record only version information that is successfully authenticated. That is, the management device records only version information of an upgrade package that allows one or more terminal devices in the enterprise to perform system upgrade. For details, refer to Scenario 2.

It should be noted that version information of a system software upgrade package in this application may indicate a system software version, or may be referred to as a version of the system software upgrade package, or may be referred to as a system version. This is not limited in this application.

The technical solutions in the foregoing method embodiment are described below in detail by using several specific embodiments.

### Scenario 1

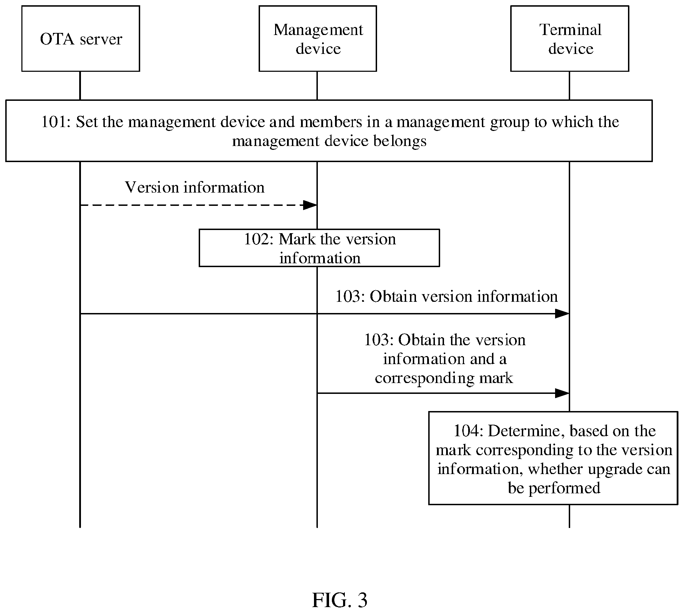

With reference to FIG. 1 and FIG. 2, FIG. 3 is a schematic flowchart of an OTA system software upgrade control method according to an embodiment of this application. In FIG. 3:

Step 101: Set a management device and members in a management group to which the management device belongs.

Optionally, in this application, an upgrade control tool may be pre-installed on the management device and a terminal device. Alternatively, an application package (application package, APK) may be pre-installed on the management device and a terminal device, and the APK includes an upgrade control program. When the upgrade program instruction is run by the management device or the terminal device, the management device or the terminal device may be enabled to perform an OTA upgrade method in this application.

Optionally, in this application, a management device may be first set, and a plurality of terminal devices are bound to the management device, to form a management group. Optionally, a management group may be established first, and a terminal device in the management group is selected as a management device.

Optionally, the management device in this application may be a device such as a mobile phone, a tablet computer, or a computer. The management device may be specified by a user. A terminal device specified as a management device may send identification information of the terminal device to an OTA server, and after receiving a response message from the OTA server, determine that an administrator identity of the terminal device has taken effect. That is, the terminal device may serve as the management device to manage system software upgrade of a group member (that is, a terminal device) in the management group to which the terminal device belongs. Optionally, the identification information may be a serial number (Serial Number, SN) of an electronic device. Alternatively, the identification information may be an international mobile equipment identity (international mobile equipment identity number, IEMI) of an electronic device, or may be another identifier of an electronic device, for example, a media access control (media access control, MAC) address.

Subsequently, a terminal device may be bound to the management device, which may also be understood as adding the terminal device (which is not a management device) to the management group to which the management device belongs. For example, each terminal device sends identification information (for example, an SN) of the terminal device to the management device. If the terminal device receives a response message returned by the management device, the terminal device determines that the binding succeeds. That is, the terminal device joins the management group successfully. Optionally, the management device may locally store received identification information, to record identities of group members that can be managed by the management device. It should be noted that before sending the identification information, each terminal device has obtained identification information and/or address information of the management device in advance. A specific obtaining manner may be broadcasting by the management device, or may be manual addition. This is not limited in this application. Optionally, a new terminal device may also be added to the management group in the foregoing manner.

For example, to facilitate work of employees, an enterprise may purchase a plurality of mobile devices in batches for the employees to use. To ensure information security when the employees use these mobile devices to access intranet resources, security management and control need to be implemented on all these mobile devices. When the enterprise purchases these mobile devices, a device manufacturer (for example, a device producer or a device vendor) may grant information about an authorized login account and an information list of devices bound to the information about the authorized login account to an IT administrator of the enterprise. The information list of devices bound to the information about the authorized login account includes identifiers of the mobile devices purchased by the enterprise in batches. The management device can only manage and control a terminal device corresponding to an identifier included in the information list of devices bound to the information about the authorized login account, and upgrade a system of the terminal device.

After obtaining the information about the authorized login account and the information list of devices bound to the information about the authorized login account, the IT administrator of the enterprise may obtain, based on the device information list, a list of devices to be managed and controlled. The list of devices to be managed and controlled may include all identifiers in the device information list, or may include some identifiers in the device information list.

Step 102: The management device obtains version information from the OTA server, and marks the version information.

Specifically, in this application, the management device may obtain the version information on the OTA server, and the version information includes but is not limited to a name and a version number of a system software upgrade package on the OTA server.

For example, the management device may periodically scan the OTA server to learn of whether there is an updated system software upgrade package in system software upgrade packages on the OTA server. The updated system software upgrade package means that version information of the system software upgrade package is not stored on the management device. In an example, if the management device detects that there is an updated system software upgrade package on the OTA server, the management device obtains version information of the system software upgrade package.

In this application, after obtaining the version information, the management device may make a mark on the version information. The mark may also be understood as authorization information in this application, and the mark includes availability or unavailability. Version information with an availability mark indicates that one or more terminal devices in the terminal devices managed by the management device can perform system upgrade based on an upgrade package of this version. On the contrary, version information with an unavailability mark indicates that one or more terminal devices in the terminal devices managed by the management device cannot use the upgrade package to perform system upgrade. It should be noted that a form of the mark may be set based on an actual requirement. For example, a mark "OK" indicates availability, and a mark "NG" indicates unavailability. This is not limited in this application.

In a possible implementation, the management device may mark the version information according to a preset marking policy. Optionally, the marking policy may include but is not limited to a function policy, an interface policy, and the like. The function policy means that the management device may determine, according to the function policy, whether a new system software upgrade package is available. For example, enterprise software on a terminal device needs to enable a function A (for example, a map function). If the function A is disabled in the new system software upgrade package on the OTA server, the terminal device may determine, according to the function policy, that the new system software upgrade package is unavailable. The interface policy is similar. To be specific, the terminal device may determine, based on an interface setting in the interface policy, whether a new system software upgrade package is available.

In a possible implementation, the management device may receive an instruction triggered by an operator, and generate, based on the instruction, a mark corresponding to the version information. For example, the operator may determine, based on compatibility between a new system software upgrade package and enterprise software in the terminal device, whether the terminal device can perform upgrade based on the new system software upgrade package. If it is determined that the terminal device cannot perform upgrade based on the new system software upgrade package, the management device may be indicated to mark version information of the upgrade package as unavailable. If it is determined that the terminal device can perform upgrade based on the new system software upgrade package, the management device may be indicated to mark version information of the upgrade package as available.

Step 103: A terminal device obtains version information from the OTA server end, and obtains a mark corresponding to the version information from the management device end.

Specifically, in this application, the terminal device may obtain, by accessing the OTA, version information of a target system software upgrade package that is on the OTA server and whose version is later than a current system software version of the terminal device. It should be noted that the current system software version of the terminal device is a version of downloaded system software or a version of downloaded and installed system software. In other words, in this application, the terminal device may periodically detect whether the OTA server has a system software upgrade package that is not used for upgrade on the terminal device and that is not stored on the terminal device. For example, the terminal device may periodically scan the OTA server to obtain version information, for example, a version number, corresponding to a system software upgrade package on the OTA server. The terminal device may compare current latest version information on the OTA server with current version information of system software on the terminal device, to determine whether a system software upgrade package that can be used for upgrade on the terminal device exists on the OTA. The foregoing detection manner is merely an example. For specific detection details or another detection manner, refer to the conventional technology. Details are not described in this application.

Optionally, when the terminal device detects that a system software upgrade package that is not used for upgrade on the terminal device and that is not stored on the terminal device exists on the OTA server, the terminal device obtains version information of the upgrade package from the OTA server end.

In a possible implementation, the terminal may send a query request message to the management device. The message may carry the version information that is of the system software upgrade package (namely, the target system software upgrade package in this application) and that needs to be queried, and is used to indicate to query an authorization status corresponding to the version information of the target system software upgrade package, that is, a mark of the version information of the target system software upgrade package. The management device sends a query response message to the terminal in response to the message. The response message may carry the version information of the target system software upgrade package and the corresponding mark.

In another possible implementation, the terminal may send a query request message to the management device. The message is used to query a mark corresponding to version information of each system software upgrade package on the management device. The management device sends a query response message to the terminal in response to the message. The response message may carry a mark corresponding to version information of each system software upgrade package stored on the management device.

Optionally, in this application, the APK on the terminal device may be started after the version information on the OTA server is obtained. In other words, the APK is used to request the mark of the version information from the management device and perform two-factor verification. Optionally, the APK on the terminal device may alternatively be periodically started. In other words, all steps performed by the terminal device in this application are controlled and performed by the APK, including related steps such as joining the management group (that is, being bound to the management device), scanning the OTA server, and two-factor verification.

Step 104: The terminal device determines, based on the mark corresponding to the version information, whether upgrade can be performed.

Specifically, in this application, after obtaining the version information and the corresponding mark from the management device, the terminal device may perform two-factor verification, that is, determine whether the version information returned by the management device is consistent with version information obtained by the terminal device from the OTA server, and when the version information is consistent, determine whether the mark corresponding to the version information indicates that the terminal device is allowed to perform system software upgrade based on a system software upgrade package corresponding to the version information.

In a possible implementation, as described in step 103, if the management device returns the mark corresponding to the version information of each system software upgrade package, the terminal device may match the version information obtained from the OTA server against the version information obtained from the management device end, and obtain a mark corresponding to successfully matched version information.

In another possible implementation, as described in step 103, if the management device returns the mark corresponding to the version information (that is, the version information of the target system software upgrade package) requested by the terminal, the terminal may compare the version information obtained from the OTA server with the version information obtained from the management device. If the version information is consistent, a subsequent operation is performed.

In an example, if the version information corresponds to an availability mark, the terminal device may determine that system software upgrade may be performed based on the system software upgrade package corresponding to the version information. The terminal device may download the system software upgrade package from the OTA server end, and perform system software upgrade based on the system software upgrade package with permission (for example, a user taps an upgrade confirmation button). In another example, if the version information corresponds to an unavailability mark, the APK on the terminal interrupts the upgrade procedure. That is, the upgrade procedure ends. Optionally, the terminal device may perform step 103 and step 104 again in a next scanning period. If the mark corresponding to the version information is modified to availability, the terminal device performs upgrade based on the system software upgrade package corresponding to the version information.

In a possible implementation, if the terminal device detects, on the OTA server end, a plurality of system software upgrade packages that can be used for upgrade, the terminal device may obtain, from the OTA server, version information corresponding to the plurality of upgrade packages. Correspondingly, in step 103, the terminal device may obtain, from the management device end, marks corresponding to the plurality of pieces of version information. In addition, in step 104, the terminal device may determine, based on the marks corresponding to the plurality of pieces of version information, whether a plurality of versions can be used for upgrade.

In a possible implementation, in step 102, after obtaining new version information, the management device may mark the new version information as unavailable by default. Optionally, after receiving an instruction or determining that the version is available, the management device modifies a default value (that is, an unavailability mark) to availability.

In a possible implementation, in step 103, because scanning periods of the terminal device and the management device are different, it is possible that the terminal device finds, by scanning, that an updated system software upgrade package exists on the OTA server end, but the management device has not scanned the OTA and has not obtained version information of the updated system software upgrade package. In this case, after the terminal device obtains the version information from the OTA server end, if the terminal device detects that neither of the version information and a mark corresponding to the version information exists on the management device end, the terminal device may detect again whether the version information exists on the management device side after preset duration (which may be set based on an actual requirement).

In a possible implementation, the management device may manage upgrade of different system software. For example, an OTA server A stores system software A and a system software upgrade package of the system software A, and an OTA server B stores system software B and a system software upgrade package of the system software B. In step 103, the management device may separately communicate with the OTA server A and the OTA server B, to obtain version information of the system software A and version information of the system software B, and separately mark the version information of the system software. Optionally, when obtaining the identification information of the terminal devices in the management group, the management device may obtain types of system software of the terminal devices, and group the terminal devices based on the types of the system software. In step 103, the management device may authorize (that is, mark) a version of a system software upgrade package corresponding to each group.

In a possible implementation, the management device may group the members based on a user instruction, and after obtaining updated version information, the management device may authorize a version of a system software upgrade package corresponding to each group. For example, the management device obtains a version 1.0, marks the version 1.0 as available for terminal devices in a group 1, and marks the version 1.0 as unavailable for terminal devices in a group 2. This improves flexibility of system software upgrade control.

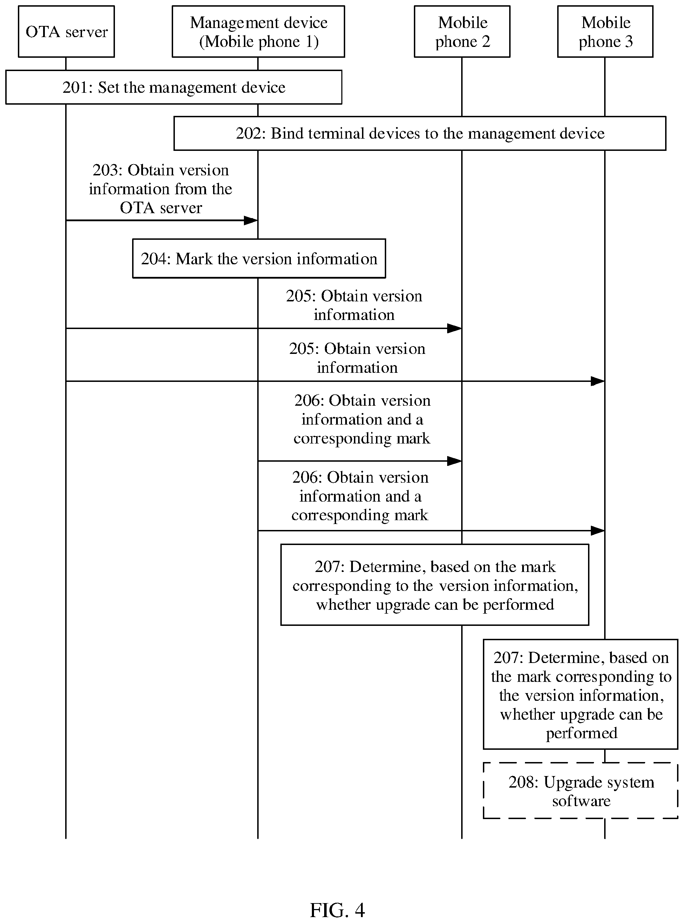

Based on the embodiment shown in FIG. 3, FIG. 4 is a schematic flowchart of an example of an OTA system software upgrade control method. In FIG. 4:

Step 201: Set a management device.

For example, as shown in FIG. 4, a mobile phone 1 (referred to as a management device below) sends an SN to an OTA server, and the OTA server locally stores the SN of the management device, and sends a response message to the management device. If the management device receives the response message from the OTA server, the management device determines that the management device has been added to a communications network as an administrator.

Step 202: Bind terminal devices (a mobile phone 2 and a mobile phone 3) to the management device.

For example, after an enterprise customer purchases a batch of mobile phones (for example, including the mobile phone 2 and the mobile phone 3), the mobile phone 2 and the mobile phone 3 may obtain address information and/or identification information such as the SN of the management device (the mobile phone 1). The mobile phone 2 and the mobile phone 3 send respective identification information (for example, an SN) to the management device based on the address information and/or the identification information.

Optionally, in this embodiment, an APK is pre-installed by a manufacturer on all of the mobile phones purchased by the enterprise customer and the management device. Optionally, an enterprise may separately purchase APKs (including an APK corresponding to the management device and an APK corresponding to a terminal device), the APK corresponding to the management device is installed on an electronic device specified as a management device, and the APK corresponding to the terminal device is installed on a mobile phone of an employee that needs to be managed in the enterprise. This is not limited in this application.

It should be noted that, to distinguish between a terminal device used by an enterprise employee and a terminal device used by an ordinary consumer, a permission of an APK and an administrator device and adding of a management group member described in this application need to be strictly controlled (a control manner is not limited), to prevent a mobile phone of an ordinary consumer from being passively and unintentionally added to a management group. For example, the control manner may be as follows: Even if a common device (a mobile phone used by a non-enterprise person) obtains an upgrade control tool, a condition for successfully installing the upgrade control tool on the common device is confirmation by an enterprise administrator.

The management device (which is specifically an APK on the management device) receives the SNs sent by the mobile phone 2 and the mobile phone 3, locally records the SNs, and returns response messages to the mobile phone 2 and the mobile phone 3. After receiving the response messages, the mobile phone 2 and the mobile phone 3 determine that the mobile phone 2 and the mobile phone 3 are successfully bound to the management device. That is, the mobile phone 2 and the mobile phone 3 have successfully joined a management group to which the management device belongs.

Step 203: The management device obtains version information from the OTA server.

Specifically, the management device may periodically scan the OTA server to detect whether an updated system software upgrade package exists on the OTA server, that is, a system software upgrade package corresponding to version information that is not stored in the management device. For a specific scanning manner, refer to the conventional technology. This is not limited in this application.

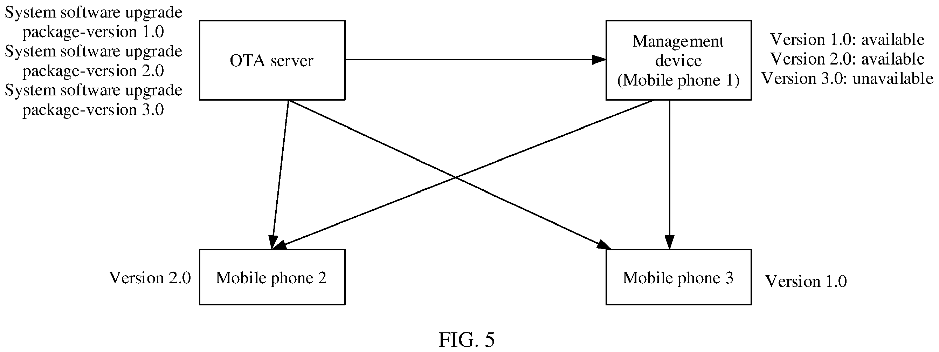

For example, as shown in FIG. 5, versions of a system software upgrade package currently stored in the OTA server in ascending order include a version 1.0, a version 2.0, and a version 3.0. The management device may detect, by scanning the OTA server, that a currently latest version of the system software upgrade package on the OTA server is the version 3.0, and the management device detects whether version information corresponding to the version is obtained. If the management device does not locally cache the version information, the management device obtains the version information (namely, a version number) corresponding to the version from the OTA server side. In this embodiment, the management device detects that the information corresponding to the version 3.0 is not stored locally, and the management device obtains the version information (that is, the version 3.0) of the system software upgrade package from the OTA server end.

Step 204: The management device marks the version information.

Still refer to FIG. 4. Optionally, after obtaining the version information, the management device may authorize the version information based on a user instruction, and locally store an authorization result and the version information correspondingly.

For example, as shown in FIG. 5, the management device may mark the version 3.0 as unavailable based on a user instruction. Both the version 1.0 and the version 2.0 have been marked as available.

Step 205: The terminal devices (the mobile phone 2 and the mobile phone 3) obtain version information from the OTA server.

Specifically, similarly, the mobile phone 2 and the mobile phone 3 may periodically scan the OTA server to detect whether a system software upgrade package that is not used for upgrade on the mobile phone 2 and/or the mobile phone 3 and is not downloaded on the mobile phone 2 and/or the mobile phone 3 exists on the OTA server.

For example, refer to FIG. 5. The following provides description by using an example in which a current system software version on the mobile phone 2 is 2.0 and a current system software version on the mobile phone 3 is 1.0.

The mobile phone 2 determines, by scanning the OTA server, that the current upgrade package versions on the OTA server include the version 1.0, the version 2.0, and the version 3.0. The mobile phone 2 compares the current versions on the OTA server with the version of the system software upgrade package on the mobile phone 2, and determines that a system software upgrade package that can be used for upgrade on the mobile phone 2 exists on the OTA server, that is, the version 3.0. When determining that the upgrade package is not stored locally, the mobile phone 2 may further obtain version information of the upgrade package from the OTA server end, that is, the version number 3.0.

The mobile phone 3 determines, by scanning the OTA server, that upgradeable versions are the version 2.0 and the version 3.0, and obtains version information from the OTA server end. Specific details are similar to those of the mobile phone 2, and details are not described herein again.

Step 206: The terminal devices (the mobile phone 2 and the mobile phone 3) obtain marks corresponding to the version information from the management device.

Specifically, the terminal device (which is specifically an APK on the terminal device) may obtain, from the management device end, the version information corresponding to the upgrade package that needs to be used for upgrade, that is, a mark corresponding to the version information obtained from the OTA server end, to determine whether to allow the terminal device to perform upgrade based on the upgrade package.

For example, the mobile phone 2 may send a query request to the management device. The query request carries the version information, that is, the version 3.0. After receiving the version information, the management device matches the version information against one or more pieces of local version information, and obtains a mark corresponding to successfully matched version information. As shown in FIG. 4, if the management device finds that the version 3.0 is marked as unavailable, the management device sends a query response to the mobile phone 2. The query response carries the version information (that is, the version 3.0) and a corresponding mark (that is, unavailability).

For example, the mobile phone 3 may send a query request to the management device. The query request carries the version information, including the version 2.0 and the version 3.0. After performing query, the management device sends a query response to the mobile phone 3. The message carries the version 2.0, a mark (that is, availability) of the version 2.0, the version 3.0, and a mark (that is, unavailability) of the version 3.0.

Step 207: The terminal devices (the mobile phone 2 and the mobile phone 3) determine, based on the marks corresponding to the version information, whether upgrade can be performed.

For example, after receiving the query response from the management device, the mobile phone 2 learns that the version information 3.0 corresponds to an unavailability mark, and the procedure ends. Optionally, the mobile phone 2 may repeat steps 203 to 207 in a next scanning period. If the mark of the version 3.0 in the management device is modified to availability, the mobile phone 2 determines that upgrade can be performed.

For example, the mobile phone 3 may determine, based on the version information and the corresponding mark that are obtained from the management device end, that the mobile phone 3 may perform upgrade based on the upgrade package corresponding to the version 2.0, but cannot perform upgrade based on the upgrade package corresponding to the version 3.0. Specific details are similar to those of the mobile phone 2, and details are not described herein.

Optionally, after determining that upgrade can be performed, the terminal device performs step 208. Otherwise, the terminal device repeats steps 203 to 207 in a next scanning period.

Step 208: The mobile phone 3 upgrades system software.

For example, after determining that upgrade can be performed based on the upgrade package corresponding to the version 2.0, the mobile phone 3 may download, from the OTA server end, the system software upgrade package corresponding to the version 2.0. After the downloading, the mobile phone 3 may prompt a user that an upgradeable version is currently available, and after the user allows, upgrade the system software based on the upgrade package.

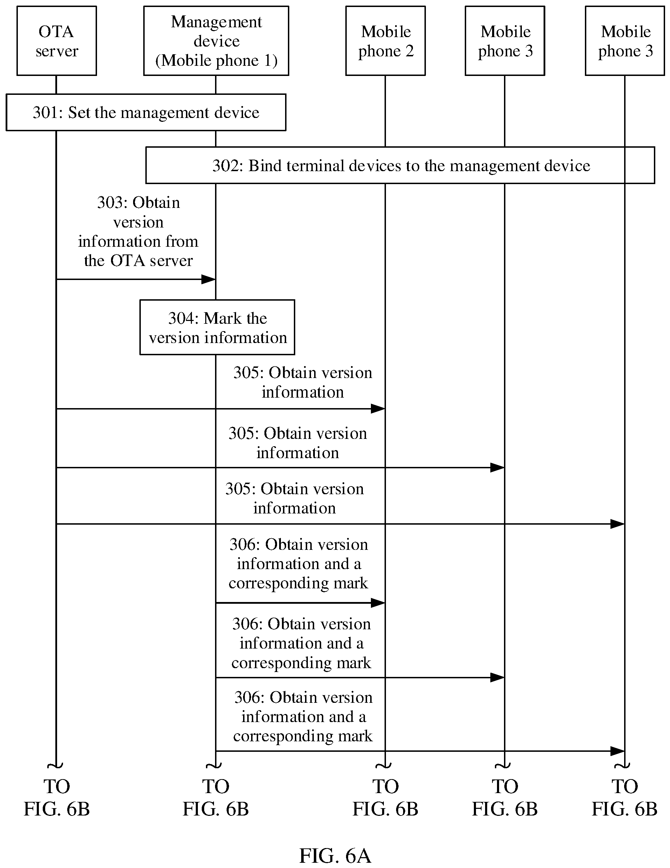

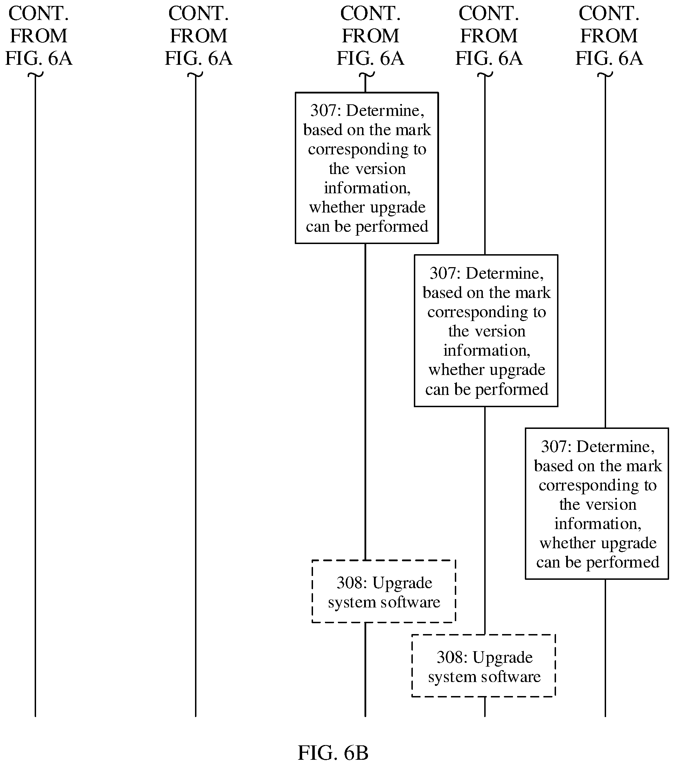

Based on the embodiment shown in FIG. 3, FIG. 6A and FIG. 6B are a schematic flowchart of an example of an OTA system software upgrade control method. Details are as follows:

As described above, an enterprise can purchase terminal devices in batches, manage terminal devices in groups by model, department, or employee type, and manage and control system software version upgrade of each group. For example, the enterprise purchases 1000 Huawei mobile phones and a Huawei mobile phone used as a management device. An upgrade control APK is pre-installed on the management device and the 1000 Huawei mobile phones.

For example, the 1000 Huawei mobile phones include four device models: HUAWEI Mate 20 Pro, HUAWEI Mate 20, HUAWEI Mate 10, and HUAWEI nova 4.

Step 301: Set a management device.

Step 302: Bind terminal devices (a mobile phone 2, a mobile phone 3, and a mobile phone 4) to the management device.

For example, in this embodiment, the mobile phones are grouped based on respective types. Specifically, the 1000 Huawei mobile phones may send respective identification information and corresponding mobile phone models to the management device. The management device may group the 1000 mobile phones into four groups based on the mobile phone models, including HUAWEI Mate 20 Pro, HUAWEI Mate 20, HUAWEI Mate 10, and HUAWEI nova 4. A model represents a name of a group. After the grouping succeeds, the management device sends a response message to each terminal device, indicating that the binding succeeds.

The following uses an example in which a mobile phone 1 is a management device, and the mobile phone 2, the mobile phone 3, and the mobile phone 4 are terminal devices to describe in detail system software upgrade control in a grouping scenario.

For example, mobile phone models of the mobile phone 2 and the mobile phone 3 are HUAWEI Mate 20 Pro, and a mobile phone model of the mobile phone 4 is HUAWEI Mate 10. Specifically, the mobile phone 2, the mobile phone 3, and the mobile phone 4 send respective identification information (for example, SNs) to the management device, to bind to the management device. For a specific binding process, refer to the foregoing description. Details are not described herein again.

For example, the management device groups the mobile phone 2 and the mobile phone 3 into a HUAWEI Mate 20 Pro group based on a user instruction (that is, grouping is performed based on a mobile phone model). For ease of marking, the HUAWEI Mate 20 Pro group is referred to as a group 1 below. The mobile phone 4 is grouped into a HUAWEI Mate 10 group. For ease of marking, the HUAWEI Mate 10 group is referred to as a group 2 below. It should be noted that an upgrade control process of another mobile phone and another group (for example, a HUAWEI Mate 20 group and a HUAWEI nova 4 group) in the 1000 mobile phones is the same as steps in this embodiment, and details are not described in this embodiment again.

Optionally, the management device may generate group lists. Each group corresponds to a list, and the list includes an SN of each mobile phone in the group.

Step 303: The management device obtains version information from an OTA server.

Step 304: The management device marks the version information.

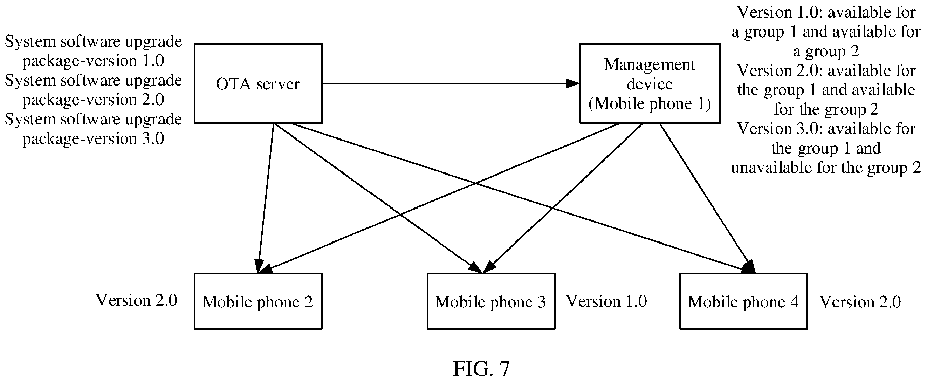

Optionally, in this embodiment, the management device may authorize a system software version to each group. For example, the management device may authorize a version 3.0 to the group 1 as available, that is, mark the version 3.0 corresponding to the group 1 as available, and authorize the version 3.0 to the group 2 as unavailable, that is, mark the version 3.0 corresponding to the group 1 as unavailable, as shown in FIG. 7.

Step 305: The terminal devices (the mobile phone 2, the mobile phone 3, and the mobile phone 4) obtain version information from the OTA server.

For example, refer to FIG. 7. An example in which a current system software version of the mobile phone 2 is 2.0, a current system software version of the mobile phone 3 is 1.0, and a current system software version of the mobile phone 4 is 2.0 is used for description. Correspondingly, the mobile phone 2 obtains version information (version 3.0) from the OTA server, the mobile phone 3 obtains version information (version 2.0 and version 3.0) from the OTA server, and the mobile phone 4 obtains version information (version 3.0) from the OTA server. For a specific obtaining manner, refer to the foregoing embodiments. Details are not described herein again.

Step 306: The terminal devices (the mobile phone 2, the mobile phone 3, and the mobile phone 4) obtain marks corresponding to the version information from the management device.

For example, the mobile phone 2 sends a query request to the management device, to query a mark of the version 3.0. The mobile phone 3 sends a query request to the management device, to query marks of the version 2.0 and the version 3.0. The mobile phone 4 sends a query request to the management device, to query a mark of the version 3.0.

The management device finds, based on an SN of the mobile phone 2, that the mobile phone 2 belongs to the group 1. The management device queries system software version authorization of the group 1 based on the group 1, and finds that a mark that is of the group 1 and that corresponds to the version 3.0 is availability. Then, the management device sends the version information 3.0 and the mark (availability) corresponding to the version information 3.0 to the mobile phone 2. Similarly to the mobile phone 2, the mobile phone 3 obtains an availability mark corresponding to the version 2.0 and an availability mark corresponding to the version 3.0 from the management device. The mobile phone 4 obtains an unavailability mark corresponding to the version 3.0 from the management device.

Step 307: The terminal devices (the mobile phone 2, the mobile phone 3, and the mobile phone 4) determine, based on the marks corresponding to the version information, whether upgrade can be performed.

For example, the mobile phone 2 determines that upgrade to the version 3.0 can be performed, the mobile phone 3 determines that upgrade to the version 3.0 can be performed, and the mobile phone 4 determines that upgrade to the version 3.0 cannot be performed. For specific details, refer to the foregoing embodiments. Details are not described herein.

Step 308: The mobile phone 2 and the mobile phone 3 upgrade system software.

### Scenario 2

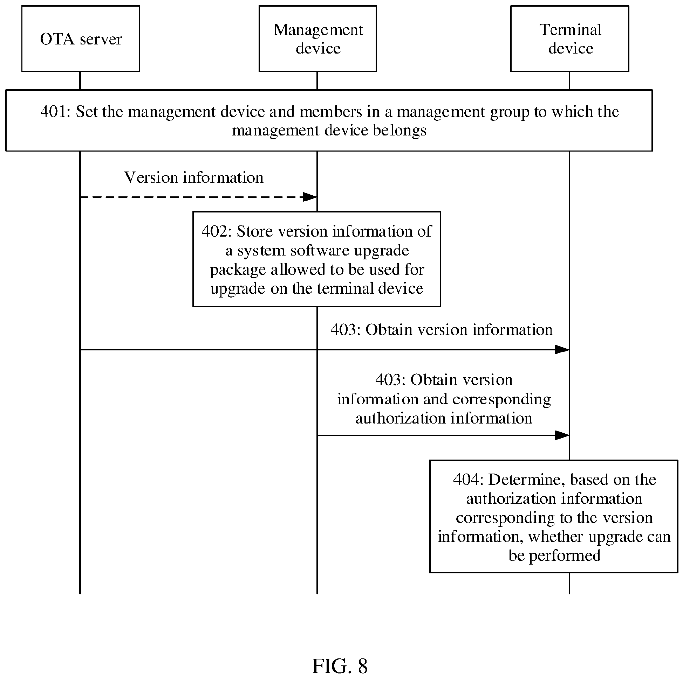

With reference to FIG. 1 and FIG. 2, FIG. 8 is a schematic flowchart of an OTA system software upgrade control method according to an embodiment of this application. In FIG. 8:

Step 401: Set a management device and members in a management group to which the management device belongs.

A specific step is the same as that in scenario 1, and details are not described herein again.

Step 402: The management device obtains version information from an OTA server, and stores version information of a system software upgrade package allowed to be used for upgrade on the terminal device.

Specifically, in this embodiment, after obtaining the version information of each system software upgrade package on the OTA server, the management device may store, based on a user instruction, only the version information of the system software upgrade package allowed to be used for upgrade on the terminal device.

Optionally, in a group management scenario, the management device may record, in a group list corresponding to each group, version information of an upgrade package that is available for system upgrade on terminal devices in the group.

Step 403: A terminal device obtains version information from the OTA server end, and obtains authorization information corresponding to the version information from the management device end.

Specifically, after obtaining version information of a target system software upgrade package from the OTA server end, the terminal device may obtain, from the management device end, authorization information corresponding to the version information of the target system software upgrade package.

In a possible implementation, the terminal device sends a query request message to the management device. The message may carry the version information that is of the system software upgrade package (namely, the target system software upgrade package in this application) and that needs to be queried, and is used to indicate to query an authorization status corresponding to the version information of the target system software upgrade package. In response to the message, the management device locally queries whether the version information of the target system software upgrade package is stored. If the version information of the target system software upgrade package exists, the management device sends a query response message to the terminal. The response message may carry the version information of the target system software upgrade package. If the version information of the target system software upgrade package does not exist, optionally, the management device may send a query response message to the terminal device. The message may not include any information, or include information indicating that the version information of the target system software upgrade package is unauthorized.

In another possible implementation, the terminal may send a query request message to the management device. The message is used to query authorization information corresponding to version information of each system software upgrade package on the management device. In response to the message, the management device obtains locally stored version information of a system software version allowed to be used for upgrade on the terminal device, and sends a query response message to the terminal. The message carries the version information that is of the system software version allowed to be used for upgrade on the terminal device and that is stored on the management device.

Step 404: The terminal device determines, based on the authorization information corresponding to the version information, whether upgrade can be performed.

Specifically, in this application, after obtaining the version information and the corresponding mark from the management device, the terminal device may perform two-factor verification.

In a possible implementation, as described in step 103, if the management device returns version information that is of each system software upgrade package allowed to be used for upgrade on the terminal device and that is stored on the management device, the terminal device may match the version information obtained from the management device end against version information obtained from the OTA server, and if the matching succeeds, determine that the authorization information corresponding to the version information is availability. That is, the terminal device is allowed to perform upgrade based on the system software upgrade package corresponding to the version information.

In another possible implementation, as described in step 103, if the management device returns the version information (that is, version information of the target system software upgrade package) requested by the terminal, the terminal may compare version information obtained from the OTA server with the version information obtained from the management device, and if the information is consistent, determine that the authorization information corresponding to the version information is availability. That is, the terminal device is allowed to perform upgrade based on the system software upgrade package corresponding to the version information.

Optionally, in this application, if the terminal device determines that system software upgrade can be performed based on the system software upgrade package corresponding to the version information, the terminal device may download the system software upgrade package from the OTA server end, and perform system software upgrade based on the system software upgrade package with permission (for example, a user taps an upgrade confirmation button). Optionally, if the terminal device determines that the authorization information corresponding to the version information is unavailability, that is, if the terminal device determines that system software upgrade cannot be performed based on the system software upgrade package corresponding to the version information, an APK on the terminal interrupts the upgrade procedure. That is, the upgrade procedure ends.

In a possible implementation, the verification step in this embodiment of this application, that is, the step of determining whether the terminal device can perform upgrade may be alternatively performed by the management device. Specifically, the management device may correspondingly record identification information of each terminal device, a type of system software, and a current system software version. Optionally, after obtaining version information of each system software upgrade package from the OTA server and marking the version information, the management device may determine, based on a marking result and a current system software version on each terminal device, whether each terminal device can perform upgrade based on the system software upgrade package. For example, the management device records an SN of a mobile phone 2, a type of system software that is system software A, and a current system software version of the mobile phone 2 that is a version 2.0. The management device learns, from the OTA server end, that a current latest upgrade package version of the system software A is a version 3.0, and marks the version 3.0 as available based on a user instruction. The management device traverses locally recorded related information of each terminal device, and determines that the mobile phone 2 can perform upgrade based on a system software upgrade package of the version 3.0. The management device may send an indication message to the mobile phone 2, to indicate that the mobile phone 2 can download the system software upgrade package whose version number is 3.0 from the OTA server end.

The foregoing mainly describes the solutions provided in embodiments of this application from the perspective of interaction between network elements. It can be understood that, to implement the foregoing functions, the management device and the terminal include a corresponding hardware structure and/or a corresponding software module for performing all the functions. A person skilled in the art should be easily aware that, in combination with the examples described in the embodiments disclosed in this specification, units, algorithms, and steps may be implemented by hardware or a combination of hardware and computer software in the embodiments of this application. Whether a function is performed by hardware or hardware driven by computer software depends on particular applications and design constraints of technical solutions. A person skilled in the art may use different methods to implement the described functions for each particular application, but it should not be considered that the implementation goes beyond the scope of this application

In embodiments of this application, the management device and the terminal may be divided into function modules based on the foregoing method examples. For example, each function module may be obtained through division for a corresponding function, or two or more functions may be integrated into one processing module. The integrated module may be implemented in a form of hardware, or may be implemented in a form of a software functional module. It should be noted that, in embodiments of this application, division into the modules is an example, and is merely a logical function division. During actual implementation, another division manner may be used.

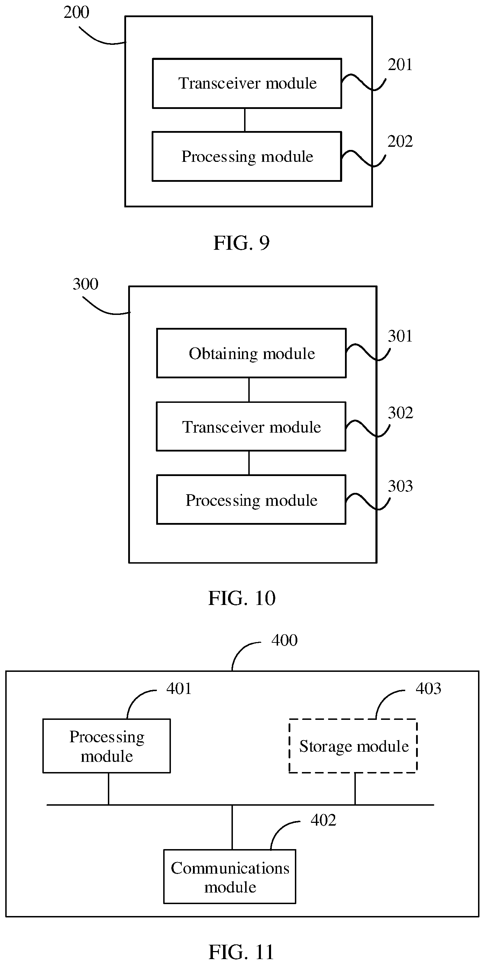

FIG. 9 is a schematic diagram of a management device. Refer to FIG. 9. The management device 200 may include a transceiver module 201 and a processing module 202. The transceiver module 201 is configured to receive a query request sent by a terminal device, where the query request is used to query authorization information of a target system software upgrade package. The processing module 202 is configured to obtain, from a local cache based on the query request, the authorization information corresponding to the target system software upgrade package, where the authorization information includes availability or unavailability, and the authorization information is availability and indicates that the terminal device is allowed to perform system software upgrade based on the target system software upgrade package, or the authorization information is unavailability and indicates that the terminal device is not allowed to perform system software upgrade based on the target system software upgrade package. The transceiver module is further configured to send the authorization information to the terminal device.

Based on the foregoing technical solution, the processing module 202 is further configured to: after detecting that version information of at least one system software upgrade package on an OTA server is not cached locally, obtain the version information of the at least one system software upgrade package; determine, according to a preset rule and/or a user instruction, whether to allow the terminal device to perform system software upgrade based on the at least one system software upgrade package; if a determining result is yes, mark the version information of the at least one system software upgrade package as available; and if a determining result is no, mark the version information of the at least one system software upgrade package as unavailable.

Based on the foregoing technical solution, the processing module 202 is further configured to detect whether the terminal device belongs to a group managed by the management device; and if the processing module determines that the terminal device belongs to the group managed by the management device, obtain, from the local cache based on the query request, the authorization information corresponding to the target system software upgrade package.

Based on the foregoing technical solution, the query request includes version information of the target system software upgrade package, and the processing module 202 is further configured to match the version information against at least one piece of version information in the local cache; and obtain authorization information corresponding to successfully matched version information.

Based on the foregoing technical solution, the processing module 202 is further configured to query a group to which the terminal device belongs; and query authorization information of the target system software upgrade package corresponding to the group. The authorization information is availability and indicates that the management device allows one or more terminal devices in the group to perform system software upgrade based on the target system software upgrade package, or the authorization information is unavailability and indicates that the management device does not allow one or more terminal devices in the group to perform system software upgrade based on the target system software upgrade package.

FIG. 10 is a schematic diagram of a structure of a terminal. Refer to FIG. 10. A terminal 300 includes an obtaining module 301, a transceiver module 302, and a processing module 303. The obtaining module 301 is configured to access an OTA server and obtain version information of a target system software upgrade package that is on the OTA server and whose version is later than a current system software version of the terminal device. The transceiver module 302 is configured to request, from a management device, authorization information corresponding to the version information of the target system software upgrade package. The processing module 303 is configured to determine, in response to the authorization information that is received from the management device and that corresponds to the version information of the target system software upgrade package, that the target system software upgrade package can be obtained from the OTA server. The obtaining module is further configured to obtain the target system software upgrade package from the OTA server, where the authorization information indicates whether the terminal device is allowed to obtain the target system software upgrade package from the OTA server.

Based on the foregoing technical solution, the processing module 303 is specifically configured to receive the authorization information that is sent by the management device and that corresponds to the version information of the target system software upgrade package; and if the authorization information includes an availability mark, determine that the authorization information corresponding to the version information of the target system software upgrade package indicates that the terminal device is allowed to obtain the target system software upgrade package from the OTA server.

Based on the foregoing technical solution, the processing module 303 is specifically configured to receive version information of at least one system software upgrade package and authorization information corresponding to the version information of the at least one system software upgrade package that are sent by the management device; match the version information of the target system software upgrade package against version information of the at least one system software upgrade package, and determine authorization information corresponding to successfully matched version information of a system software upgrade package; and if the authorization information includes an availability mark, determine that the authorization information corresponding to the version information of the target system software upgrade package indicates that the terminal device is allowed to obtain the target system software upgrade package from the OTA server.

Based on the foregoing technical solution, the processing module 303 is specifically configured to receive, by the terminal device, a response message sent by the management device; and if the response message includes the version information of the target system software upgrade package, determine that the authorization information corresponding to the version information of the target system software upgrade package indicates that the terminal device is allowed to obtain the target system software upgrade package from the OTA server.

Based on the foregoing technical solution, the transceiver module 302 is configured to send a query request message to the management device, where the query request message includes the version information of the target system software upgrade package.

Based on the foregoing technical solution, the processing module 303 is configured to: if the terminal device determines, in response to the authorization information that is received from the management device and that corresponds to the version information of the target system software upgrade package, that the authorization information indicates that the terminal device is allowed to obtain the target system software upgrade package from the OTA server, determine that the target system software upgrade package can be obtained from the OTA server. The transceiver module 302 is configured to obtain the target system software upgrade package from the OTA server.

The processing module 303 is alternatively configured to: if the terminal device determines, in response to the authorization information that is received from the management device and that corresponds to the version information of the target system software upgrade package, that the authorization information indicates that the terminal device is not allowed to obtain the target system software upgrade package from the OTA server, determine that the target system software upgrade package cannot be obtained from the OTA server, and determine that an OTA upgrade procedure ends.

Based on the foregoing technical solution, the transceiver module 302 is further configured to request the management device to join a group managed by the management device.

Based on the foregoing technical solution, the transceiver module 302 is further configured to send identification information of the terminal device to the management device; and if an acknowledgment message sent by the management device is received, the terminal device determines that the terminal device has joined the group.

The following describes an apparatus provided in an embodiment of this application. As shown in FIG. 11:
The apparatus includes a processing module 401 and a communications module 402. Optionally, the apparatus further includes a storage module 403. The processing module 401, the communications module 402, and the storage module 403 are connected through a communications bus.

The communications module 402 may be an apparatus having a transceiver function, and is configured to communicate with another network device or a communications network.

The storage module 403 may include one or more memories. The memory may be a component configured to store a program or data in one or more devices or circuits.

The storage module 403 may exist independently, and is connected to the processing module 401 through the communications bus. The storage module may alternatively be integrated with the processing module 401.

The apparatus 400 may be the terminal in the embodiments of this application, for example, a terminal 1 or a terminal 2. A schematic diagram of the terminal may be shown in FIG. 2. Optionally, the communications module 402 of the apparatus 400 may include an antenna and a transceiver of the terminal. Optionally, the communications module 402 may further include an output device and an input device.

The apparatus 400 may be a chip in the terminal in embodiments of this application. The communications module 402 may be an input/output interface, a pin, a circuit, or the like. Optionally, the storage module may store computer-executable instructions in a method on a terminal side, so that the processing module 401 performs the method on the terminal side in the foregoing embodiments. The storage module 403 may be a register, a cache, a RAM, or the like. The storage module 403 may be integrated with the processing module 401. The storage module 403 may be a ROM or another type of static storage device that can store static information and instructions. The storage module 403 may be independent of the processing module 401. Optionally, with development of wireless communications technologies, the transceiver may be integrated into the apparatus 400.

When the apparatus 400 is a terminal or a chip in a terminal in the embodiments of this application, the apparatus 400 may implement the methods performed by the terminal in the foregoing embodiments.

The apparatus 400 may be the management device in embodiments of this application. Optionally, the communications module 402 of the apparatus 400 may include an antenna and a transceiver of the management device, and the communications module 402 may further include a network interface of the management device.

The apparatus 400 may be a chip in the management device in embodiments of this application. The communications module 402 may be an input/output interface, a pin, a circuit, or the like. Optionally, the storage module may store computer-executable instructions in a method on a management device side, so that the processing module 401 performs the method on the management device side in the foregoing embodiments. The storage module 403 may be a register, a cache, a RAM, or the like. The storage module 403 may be integrated with the processing module 401. The storage module 403 may be a ROM or another type of static storage device that can store static information and instructions. The storage module 403 may be independent of the processing module 401. Optionally, with development of wireless communications technologies, the transceiver may be integrated into the apparatus 400.

When the apparatus 400 is the management device or the chip in the management device in embodiments of this application, the method performed by the management device in the foregoing embodiments may be implemented.

Embodiments of this application further provide a computer-readable storage medium. The methods described in the foregoing embodiments may be all or partially implemented by using software, hardware, firmware, or any combination thereof. If the methods are implemented in the software, functions used as one or more instructions or code may be stored in the computer-readable medium or transmitted on the computer-readable medium. The computer-readable medium may include a computer storage medium and a communication medium, and may further include any medium that can transfer a computer program from one place to another. The storage medium may be any available medium accessible to a computer.

In an optional design, the computer-readable medium may include a RAM, a ROM, an EEPROM, a CD-ROM or another optical disc memory, a magnetic disk memory or another magnetic storage device, or any other medium that can be configured to carry or store required program code in a form of an instruction or a data structure and that may be accessed by the computer. In addition, any connection is appropriately referred to as a computer-readable medium. For example, if a coaxial cable, an optical fiber cable, a twisted pair, a digital subscriber line (DSL), or wireless technologies (such as infrared, radio, and microwave) are used to transmit software from a website, a server, or another remote source, the coaxial cable, the optical fiber cable, the twisted pair, the DSL, or the wireless technologies such as infrared, radio, and microwave are included in a definition of the medium. Magnetic disks and optical discs used in this specification include a compact disk (CD), a laser disk, an optical disc, a digital versatile disc (DVD), a floppy disk, and a Blu-ray disc. The magnetic disks usually magnetically reproduce data, and the optical discs optically reproduce data by using laser light. The foregoing combinations should also be included within the scope of the computer-readable medium.

Embodiments of this application further provide a computer program product. The methods described in the foregoing embodiments may be all or partially implemented by using software, hardware, firmware, or any combination thereof. When the methods are implemented in the software, the methods may be all or partially implemented in a form of the computer program product. The computer program product includes one or more computer instructions. When the foregoing computer program instructions are loaded and executed on a computer, the procedures or functions described in the foregoing method embodiments are all or partially generated. The computer may be a general-purpose computer, a dedicated computer, a computer network, a network device, user equipment, or another programmable apparatus.

The foregoing describes embodiments of this application with reference to the accompanying drawings. However, this application is not limited to the foregoing specific implementations. The foregoing specific implementations are merely examples, and are not limitative. Inspired by this application, a person of ordinary skill in the art may further make many modifications without departing from the purposes of this application and the protection scope of the claims, and all the modifications shall fall within the protection scope of this application.

## Claims

1. An over the air OTA system software upgrade control method, comprising:
accessing (403), by a terminal device, an OTA server, and obtaining version information of a target system software upgrade package that is on the OTA server and whose version is later than a current system software version of the terminal device;
requesting (403), by the terminal device from a management device, authorization information corresponding to the version information of the target system software upgrade package; and
determining (404), by the terminal device in response to the authorization information that is received from the management device and that corresponds to the version information of the target system software upgrade package, that the target system software upgrade package can be obtained from the OTA server, and obtaining the target system software upgrade package from the OTA server, wherein the authorization information indicates whether the terminal device is allowed to obtain the target system software upgrade package from the OTA server,
wherein the determining, by the terminal device in response to the authorization information that is received from the management device and that corresponds to the version information of the target system software upgrade package, that the target system software upgrade package can be obtained from the OTA server comprises:
receiving, by the terminal device, the authorization information that is sent by the management device and that corresponds to the version information of the target system software upgrade package; and
if the authorization information comprises an availability mark, determining that the authorization information corresponding to the version information of the target system software upgrade package indicates that the terminal device is allowed to obtain the target system software upgrade package from the OTA server; or
wherein the determining, by the terminal device in response to the authorization information that is received from the management device and that corresponds to the version information of the target system software upgrade package, that the target system software upgrade package can be obtained from the OTA server comprises:
receiving, by the terminal device, version information of at least one system software upgrade package and authorization information corresponding to the version information of the at least one system software upgrade package that are sent by the management device;
matching, by the terminal device, the version information of the target system software upgrade package against the version information of the at least one system software upgrade package, and determining authorization information corresponding to successfully matched version information of a system software upgrade package; and
if the authorization information comprises an availability mark, determining that the authorization information corresponding to the version information of the target system software upgrade package indicates that the terminal device is allowed to obtain the target system software upgrade package from the OTA server.

2. The method according to claim 1, wherein the determining, by the terminal device in response to the authorization information that is received from the management device and that corresponds to the version information of the target system software upgrade package, that the target system software upgrade package can be obtained from the OTA server comprises:
receiving, by the terminal device, a response message sent by the management device; and
if the response message comprises the version information of the target system software upgrade package, determining that the authorization information corresponding to the version information of the target system software upgrade package indicates that the terminal device is allowed to obtain the target system software upgrade package from the OTA server.

3. The method according to claim 1 or claim 2, wherein the requesting, by the terminal device from a management device, authorization information corresponding to the version information of the target system software upgrade package comprises:
sending, by the terminal device, a query request message to the management device, wherein the query request message comprises the version information of the target system software upgrade package.

4. The method according to any one of claims 1 to 3, wherein the determining, by the terminal device in response to the authorization information that is received from the management device and that corresponds to the version information of the target system software upgrade package, that the target system software upgrade package can be obtained from the OTA server, and obtaining the target system software upgrade package from the OTA server comprises:
if the terminal device determines, in response to the authorization information that is received from the management device and that corresponds to the version information of the target system software upgrade package, that the authorization information indicates that the terminal device is allowed to obtain the target system software upgrade package from the OTA server, determining, by the terminal device, that the target system software upgrade package can be obtained from the OTA server, and obtaining the target system software upgrade package from the OTA server; or
if the terminal device determines, in response to the authorization information that is received from the management device and that corresponds to the version information of the target system software upgrade package, that the authorization information indicates that the terminal device is not allowed to obtain the target system software upgrade package from the OTA server, determining, by the terminal device, that the target system software upgrade package cannot be obtained from the OTA server, and determining that an OTA upgrade procedure ends.

5. The method according to any one of claims 1 to 4, wherein before the requesting, by the terminal device from a management device, authorization information corresponding to the version information of the target system software upgrade package, the method further comprises:
requesting, by the terminal device from the management device, to join a group managed by the management device.

6. The method according to claim 5, wherein the requesting, by the terminal device from the management device, to join a group managed by the management device comprises:
sending, by the terminal device, identification information of the terminal device to the management device; and
if an acknowledgment message sent by the management device is received, determining, by the terminal device, that the terminal device has joined the group.

7. A terminal device (400), comprising:
a memory (403) and a processor (401), wherein the memory (403) is coupled to the processor (401); and
the memory (403) stores program instructions; and when the program instructions are executed by the processor (401), the terminal device is enabled to perform the following steps:
accessing an OTA server, and obtaining version information of a target system software upgrade package that is on the OTA server and whose version is later than a current system software version of the terminal device;
requesting, from a management device, authorization information corresponding to the version information of the target system software upgrade package; and
determining, in response to the authorization information that is received from the management device and that corresponds to the version information of the target system software upgrade package, that the target system software upgrade package can be obtained from the OTA server, and obtaining the target system software upgrade package from the OTA server, wherein the authorization information indicates whether the terminal device is allowed to obtain the target system software upgrade package from the OTA server,
wherein when the program instructions are executed by the processor, the terminal device is enabled to perform the following steps:
receiving the authorization information that is sent by the management device and that corresponds to the version information of the target system software upgrade package; and
if the authorization information comprises an availability mark, determining that the authorization information corresponding to the version information of the target system software upgrade package indicates that the terminal device is allowed to obtain the target system software upgrade package from the OTA server; or
wherein when the program instructions are executed by the processor, the terminal device is enabled to perform the following steps:
receiving version information of at least one system software upgrade package and authorization information corresponding to the version information of the at least one system software upgrade package that are sent by the management device;
matching the version information of the target system software upgrade package against the version information of the at least one system software upgrade package, and determining authorization information corresponding to successfully matched version information of a system software upgrade package; and
if the authorization information comprises an availability mark, determining that the authorization information corresponding to the version information of the target system software upgrade package indicates that the terminal device is allowed to obtain the target system software upgrade package from the OTA server.

8. The terminal device according to claim 7, wherein when the program instructions are executed by the processor, the terminal device is enabled to perform the following steps:
receiving a response message sent by the management device; and
if the response message comprises the version information of the target system software upgrade package, determining that the authorization information corresponding to the version information of the target system software upgrade package indicates that the terminal device is allowed to obtain the target system software upgrade package from the OTA server.

9. The terminal device according to claim 7 or claim 8, wherein when the program instructions are executed by the processor, the terminal device is enabled to perform the following steps:
sending a query request message to the management device, wherein the query request message comprises the version information of the target system software upgrade package.

10. The terminal device according to any one of claims 7 to 9, wherein when the program instructions are executed by the processor, the terminal device is enabled to perform the following steps:
if it is determined, in response to the authorization information that is received from the management device and that corresponds to the version information of the target system software upgrade package, that the authorization information indicates that the terminal device is allowed to obtain the target system software upgrade package from the OTA server, determining that the target system software upgrade package can be obtained from the OTA server, and obtaining the target system software upgrade package from the OTA server; or
if it is determined, in response to the authorization information that is received from the management device and that corresponds to the version information of the target system software upgrade package, that the authorization information indicates that the terminal device is not allowed to obtain the target system software upgrade package from the OTA server, determining that the target system software upgrade package cannot be obtained from the OTA server, and determining that an OTA upgrade procedure ends.

11. The terminal device according to any one of claims 7 to 10, wherein when the program instructions are executed by the processor, the terminal device is enabled to perform the following steps:
requesting, from the management device, to join a group managed by the management device.

12. A computer-readable storage medium, wherein the computer-readable storage medium stores a computer program, and the computer-readable storage medium is executed by a terminal, to control the terminal to perform the method according to any one of claims 1 to 6.

13. A computer program product comprising instructions, wherein when the computer program product is run on an electronic device, the electronic device is enabled to perform the method according to any one of claims 1 to 6.

## Patentansprüche

1. Verfahren zur Steuerung des Software-Upgrades für ein Over-The-Air-OTA-System (over the air OTA), umfassend:
Zugreifen (403) auf einen OTA-Server durch ein Endgerät und Erlangen von Versionsinformationen eines Zielsystem-Software-Upgrade-Pakets, das sich auf dem OTA-Server befindet und dessen Version neuer ist als eine aktuelle Systemsoftwareversion des Endgerätes;
Anfordern (403) von Autorisierungsinformationen, die den Versionsinformationen des Zielsystem-Software-Upgrade-Pakets entsprechen, von einer Verwaltungsvorrichtung durch das Endgerät; und
Bestimmen (404), dass das Zielsystem-Software-Upgrade-Paket von dem OTA-Server erlangt werden kann, durch das Endgerät als Reaktion auf die Autorisierungsinformationen, die von der Verwaltungsvorrichtung empfangen werden und die den Versionsinformationen des Zielsystem-Software-Upgrade-Pakets entsprechen und Erlangen des Zielsystem-Software-Upgrade-Pakets von dem OTA-Server, wobei die Autorisierungsinformationen anzeigen, ob das Endgerät berechtigt ist, das Zielsystem-Software-Upgrade-Paket von dem OTA-Server zu erlangen,
wobei das Bestimmen, dass das Zielsystem-Software-Upgrade-Paket von dem OTA-Server erlangt werden kann, durch das Endgerät als Reaktion auf die Autorisierungsinformationen, die von der Verwaltungsvorrichtung empfangen werden und die den Versionsinformationen des Zielsystem-Software-Upgrade-Pakets entsprechen, Folgendes umfasst:
Empfangen der Autorisierungsinformationen, die von der Verwaltungsvorrichtung gesendet werden und die den Versionsinformationen des Zielsystem-Software-Upgrade-Pakets entsprechen, durch das Endgerät; und
wenn die Autorisierungsinformationen eine Verfügbarkeitsmarkierung umfassen, Bestimmen, dass die Autorisierungsinformationen, die den Versionsinformationen des Zielsystem-Software-Upgrade-Pakets entsprechen, anzeigen, dass das Endgerät berechtigt ist, das Zielsystem-Software-Upgrade-Paket von dem OTA-Server zu erlangen; oder
wobei das Bestimmen, dass das Zielsystem-Software-Upgrade-Paket von dem OTA-Server erlangt werden kann, durch das Endgerät als Reaktion auf die Autorisierungsinformationen, die von der Verwaltungsvorrichtung empfangen werden und die den Versionsinformationen des Zielsystem-Software-Upgrade-Pakets entsprechen, Folgendes umfasst:
Empfangen von Versionsinformationen mindestens eines System-Software-Upgrade-Pakets und von Autorisierungsinformationen, die den Versionsinformationen des mindestens einen System-Software-Upgrade-Pakets entsprechen, die von der Verwaltungsvorrichtung gesendet werden, durch das Endgerät;
Abgleichen der Versionsinformationen des Zielsystem-Software-Upgrade-Pakets mit den Versionsinformationen des mindestens einen System-Software-Upgrade-Pakets durch das Endgerät und Bestimmen von Autorisierungsinformationen, die den erfolgreich abgeglichenen Versionsinformationen eines System-Software-Upgrade-Pakets entsprechen; und
wenn die Autorisierungsinformationen eine Verfügbarkeitsmarkierung umfassen, Bestimmen, dass die Autorisierungsinformationen, die den Versionsinformationen des Zielsystem-Software-Upgrade-Pakets entsprechen, anzeigen, dass das Endgerät berechtigt ist, das Zielsystem-Software-Upgrade-Paket von dem OTA-Server zu erlangen.

2. Verfahren gemäß Anspruch 1, wobei das Bestimmen, dass das Zielsystem-Software-Upgrade-Paket von dem OTA-Server erlangt werden kann, durch das Endgerät als Reaktion auf die Autorisierungsinformationen, die von der Verwaltungsvorrichtung empfangen werden und die den Versionsinformationen des Zielsystem-Software-Upgrade-Pakets entsprechen, Folgendes umfasst:
Empfangen einer Antwortnachricht, die von der Verwaltungsvorrichtung gesendet wird, durch das Endgerät; und
wenn die Antwortnachricht die Versionsinformationen des Zielsystem-Software-Upgrade-Pakets umfasst, Bestimmen, dass die Autorisierungsinformationen, die den Versionsinformationen des Zielsystem-Software-Upgrade-Pakets entsprechen, anzeigen, dass das Endgerät berechtigt ist, das Zielsystem-Software-Upgrade-Paket von dem OTA-Server zu erlangen.

3. Verfahren gemäß Anspruch 1 oder Anspruch 2, wobei das Anfordern von Autorisierungsinformationen, die den Versionsinformationen des Zielsystem-Software-Upgrade-Pakets entsprechen, durch das Endgerät von einer Verwaltungsvorrichtung Folgendes umfasst:
Senden einer Abfrageanforderungsnachricht an die Verwaltungsvorrichtung durch das Endgerät, wobei die Abfrageanforderungsnachricht die Versionsinformationen des Zielsystem-Software-Upgrade-Pakets umfasst.

4. Verfahren gemäß einem der Ansprüche 1 bis 3, wobei das Bestimmen, dass das Zielsystem-Software-Upgrade-Paket von dem OTA-Server erlangt werden kann, durch das Endgerät als Reaktion auf die Autorisierungsinformationen, die von der Verwaltungsvorrichtung empfangen werden und die den Versionsinformationen des Zielsystem-Software-Upgrade-Pakets entsprechen, und das Erlangen des Zielsystem-Software-Upgrade-Pakets von dem OTA-Server Folgendes umfasst:
wenn das Endgerät als Reaktion auf die Autorisierungsinformationen, die von der Verwaltungsvorrichtung empfangen werden und die den Versionsinformationen des Zielsystem-Software-Upgrade-Pakets entsprechen, bestimmt, dass die Autorisierungsinformationen anzeigen, dass das Endgerät berechtigt ist, das Zielsystem-Software-Upgrade-Paket von dem OTA-Server zu erlangen, Bestimmen, dass das Zielsystem-Software-Upgrade-Paket von dem OTA-Server erlangt werden kann, durch das Endgerät, und Erlangen des Zielsystem-Software-Upgrade-Pakets von dem OTA-Server; oder
wenn das Endgerät als Reaktion auf die Autorisierungsinformationen, die von der Verwaltungsvorrichtung empfangen werden und die den Versionsinformationen des Zielsystem-Software-Upgrade-Pakets entsprechen, bestimmt, dass die Autorisierungsinformationen anzeigen, dass das Endgerät nicht berechtigt ist, das Zielsystem-Software-Upgrade-Paket von dem OTA-Server zu erlangen, Bestimmen, dass das Zielsystem-Software-Upgrade-Paket von dem OTA-Server nicht erlangt werden kann, durch das Endgerät, und Bestimmen, dass eine OTA-Upgrade-Prozedur endet.

5. Verfahren gemäß einem der Ansprüche 1 bis 4, wobei vor dem Anfordern von Autorisierungsinformationen, die den Versionsinformationen des Zielsystem-Software-Upgrade-Pakets entsprechen, durch das Endgerät von einer Verwaltungsvorrichtung, das Verfahren ferner umfasst:
Anfordern einer von der Verwaltungsvorrichtung verwalteten Gruppe beizutreten, durch das Endgerät von der Verwaltungsvorrichtung.

6. Verfahren gemäß Anspruch 5, wobei das Anfordern einer von der Verwaltungsvorrichtung verwalteten Gruppe beizutreten, durch das Endgerät von der Verwaltungsvorrichtung Folgendes umfasst:
Senden von Kennungsinformationen des Endgeräts an die Verwaltungsvorrichtung durch das Endgerät; und
wenn eine von der Verwaltungsvorrichtung gesendete Bestätigungsnachricht empfangen wird, Bestimmen, dass das Endgerät der Gruppe beigetreten ist, durch das Endgerät.

7. Endgerät (400), umfassend:
einen Speicher (403) und einen Prozessor (401), wobei der Speicher (403) mit dem Prozessor (401) gekoppelt ist; und
wobei der Speicher (403) Programmanweisungen speichert; und
wenn die Programmanweisungen durch den Prozessor (401) ausgeführt werden, das Endgerät in die Lage versetzt wird, die folgenden Schritte durchzuführen:
Zugreifen auf einen OTA-Server und Erlangen von Versionsinformationen eines Zielsystem-Software-Upgrade-Pakets, das sich auf dem OTA-Server befindet und dessen Version neuer ist als eine aktuelle Systemsoftwareversion des Endgerätes;
Anfordern von Autorisierungsinformationen, die den Versionsinformationen des Zielsystem-Software-Upgrade-Pakets entsprechen, von einer Verwaltungsvorrichtung; und
Bestimmen, dass das Zielsystem-Software-Upgrade-Paket von dem OTA-Server erlangt werden kann, als Reaktion auf die Autorisierungsinformationen, die von der Verwaltungsvorrichtung empfangen werden und die den Versionsinformationen des Zielsystem-Software-Upgrade-Pakets entsprechen und Erlangen des Zielsystem-Software-Upgrade-Pakets von dem OTA-Server, wobei die Autorisierungsinformationen anzeigen, ob das Endgerät berechtigt ist, das Zielsystem-Software-Upgrade-Paket von dem OTA-Server zu erlangen,
wobei, wenn die Programmanweisungen durch den Prozessor ausgeführt werden, das Endgerät in die Lage versetzt wird, die folgenden Schritte durchzuführen:
Empfangen der Autorisierungsinformationen, die von der Verwaltungsvorrichtung gesendet werden und die den Versionsinformationen des Zielsystem-Software-Upgrade-Pakets entsprechen; und
wenn die Autorisierungsinformationen eine Verfügbarkeitsmarkierung umfassen, Bestimmen, dass die Autorisierungsinformationen, die den Versionsinformationen des Zielsystem-Software-Upgrade-Pakets entsprechen, anzeigen, dass das Endgerät berechtigt ist, das Zielsystem-Software-Upgrade-Paket von dem OTA-Server zu erlangen; oder
wobei, wenn die Programmanweisungen durch den Prozessor ausgeführt werden, das Endgerät in die Lage versetzt wird, die folgenden Schritte durchzuführen:
Empfangen von Versionsinformationen mindestens eines System-Software-Upgrade-Pakets und von Autorisierungsinformationen, die den Versionsinformationen des mindestens einen System-Software-Upgrade-Pakets entsprechen, die von der Verwaltungsvorrichtung gesendet werden;
Abgleichen der Versionsinformationen des Zielsystem-Software-Upgrade-Pakets mit den Versionsinformationen des mindestens einen System-Software-Upgrade-Pakets und Bestimmen von Autorisierungsinformationen, die den erfolgreich abgeglichenen Versionsinformationen eines System-Software-Upgrade-Pakets entsprechen; und
wenn die Autorisierungsinformationen eine Verfügbarkeitsmarkierung umfassen, Bestimmen, dass die Autorisierungsinformationen, die den Versionsinformationen des Zielsystem-Software-Upgrade-Pakets entsprechen, anzeigen, dass das Endgerät berechtigt ist, das Zielsystem-Software-Upgrade-Paket von dem OTA-Server zu erlangen.

8. Endgerät gemäß Anspruch 7, wobei, wenn die Programmanweisungen durch den Prozessor ausgeführt werden, das Endgerät in die Lage versetzt wird, die folgenden Schritte durchzuführen:
Empfangen einer Antwortnachricht, die von der Verwaltungsvorrichtung gesendet wird; und
wenn die Antwortnachricht die Versionsinformationen des Zielsystem-Software-Upgrade-Pakets umfasst, Bestimmen, dass die Autorisierungsinformationen, die den Versionsinformationen des Zielsystem-Software-Upgrade-Pakets entsprechen, anzeigen, dass das Endgerät berechtigt ist, das Zielsystem-Software-Upgrade-Paket von dem OTA-Server zu erlangen.

9. Endgerät gemäß Anspruch 7 oder Anspruch 8, wobei, wenn die Programmanweisungen durch den Prozessor ausgeführt werden, das Endgerät in die Lage versetzt wird, die folgenden Schritte durchzuführen:
Senden einer Abfrageanforderungsnachricht an die Verwaltungsvorrichtung, wobei die Abfrageanforderungsnachricht die Versionsinformationen des Zielsystem-Software-Upgrade-Pakets umfasst.

10. Endgerät gemäß einem der Ansprüche 7 bis 9, wobei, wenn die Programmanweisungen durch den Prozessor ausgeführt werden, das Endgerät in die Lage versetzt wird, die folgenden Schritte durchzuführen:
wenn als Reaktion auf die Autorisierungsinformationen, die von der Verwaltungsvorrichtung empfangen werden und die den Versionsinformationen des Zielsystem-Software-Upgrade-Pakets entsprechen, bestimmt wird, dass die Autorisierungsinformationen anzeigen, dass das Endgerät berechtigt ist, das Zielsystem-Software-Upgrade-Paket von dem OTA-Server zu erlangen, Bestimmen, dass das Zielsystem-Software-Upgrade-Paket von dem OTA-Server erlangt werden kann, und Erlangen des Zielsystem-Software-Upgrade-Pakets von dem OTA-Server; oder
wenn als Reaktion auf die Autorisierungsinformationen, die von der Verwaltungsvorrichtung empfangen werden und den Versionsinformationen des Zielsystem-Software-Upgrade-Pakets entsprechen, bestimmt wird, dass die Autorisierungsinformationen anzeigen, dass das Endgerät nicht berechtigt ist, das Zielsystem-Software-Upgrade-Paket von dem OTA-Server zu erlangen, Bestimmen, dass das Zielsystem-Software-Upgrade-Paket nicht von dem OTA-Server erlangt werden kann, und Bestimmen, dass eine OTA-Upgrade-Prozedur endet.

11. Endgerät gemäß einem der Ansprüche 7 bis 10, wobei, wenn die Programmanweisungen durch den Prozessor ausgeführt werden, das Endgerät in die Lage versetzt wird, die folgenden Schritte durchzuführen:
Anfordern einer von der Verwaltungsvorrichtung verwalteten Gruppe beizutreten, von der Verwaltungsvorrichtung.

12. Computerlesbares Speichermedium, wobei das computerlesbare Speichermedium ein Computerprogramm speichert und das computerlesbare Speichermedium von einem Endgerät ausgeführt wird, um das Endgerät zu steuern, um das Verfahren gemäß einem der Ansprüche 1 bis 6 durchzuführen.

13. Computerprogrammprodukt, umfassend Anweisungen, wobei, wenn das Computerprogrammprodukt auf einer elektronischen Vorrichtung ausgeführt wird, die elektronische Vorrichtung in die Lage versetzt wird, das Verfahren gemäß einem der Ansprüche 1 bis 6 durchzuführen.

## Revendications

1. Procédé de commande de mise à niveau de logiciel système en direct, OTA, comprenant :
l'accès (403), par un dispositif terminal, à un serveur OTA, et l'obtention d'informations de version d'un progiciel de mise à niveau de logiciel système cible qui se trouve sur le serveur OTA et dont la version est ultérieure à une version de logiciel système actuelle du dispositif terminal ;
la demande (403), par le dispositif terminal à un dispositif de gestion, d'informations d'autorisation correspondant aux informations de version du progiciel de mise à niveau de logiciel système cible ; et
la détermination (404), par le dispositif terminal en réponse aux informations d'autorisation qui sont reçues du dispositif de gestion et qui correspondent aux informations de version du progiciel de mise à niveau de logiciel système cible, que le progiciel de mise à niveau de logiciel système cible peut être obtenu à partir du serveur OTA, et l'obtention du progiciel de mise à niveau de logiciel système cible à partir du serveur OTA, dans lequel les informations d'autorisation indiquent si le dispositif terminal est autorisé à obtenir le progiciel de mise à niveau de logiciel système cible à partir du serveur OTA,
dans lequel la détermination, par le dispositif terminal en réponse aux informations d'autorisation qui sont reçues du dispositif de gestion et qui correspondent aux informations de version du progiciel de mise à niveau de logiciel système cible, que le progiciel de mise à niveau de logiciel système cible peut être obtenu à partir du serveur OTA comprend :
la réception, par le dispositif terminal, des informations d'autorisation qui sont envoyées par le dispositif de gestion et qui correspondent aux informations de version du progiciel de mise à niveau de logiciel système cible ; et
si les informations d'autorisation comprennent une marque de disponibilité, la détermination que les informations d'autorisation correspondant aux informations de version du progiciel de mise à niveau de logiciel système cible indiquent que le dispositif terminal est autorisé à obtenir le progiciel de mise à niveau de logiciel système cible à partir du serveur OTA ; ou
dans lequel la détermination, par le dispositif terminal en réponse aux informations d'autorisation qui sont reçues du dispositif de gestion et qui correspondent aux informations de version du progiciel de mise à niveau de logiciel système cible, que le progiciel de mise à niveau de logiciel système cible peut être obtenu à partir du serveur OTA comprend :
la réception, par le dispositif terminal, d'informations de version d'au moins un progiciel de mise à niveau de logiciel système et d'informations d'autorisation correspondant aux informations de version de l'au moins un progiciel de mise à niveau de logiciel système qui sont envoyées par le dispositif de gestion ;
la mise en correspondance, par le dispositif terminal, des informations de version du progiciel de mise à niveau de logiciel système cible avec les informations de version de l'au moins un progiciel de mise à niveau de logiciel système, et la détermination d'informations d'autorisation correspondant à des informations de version mises en correspondance avec succès d'un progiciel de mise à niveau de logiciel système ; et
si les informations d'autorisation comprennent une marque de disponibilité, la détermination que les informations d'autorisation correspondant aux informations de version du progiciel de mise à niveau de logiciel système cible indiquent que le dispositif terminal est autorisé à obtenir le progiciel de mise à niveau de logiciel système cible à partir du serveur OTA.

2. Procédé selon la revendication 1, dans lequel la détermination, par le dispositif terminal en réponse aux informations d'autorisation qui sont reçues du dispositif de gestion et qui correspondent aux informations de version du progiciel de mise à niveau de logiciel système cible, que le progiciel de mise à niveau de logiciel système cible peut être obtenu à partir du serveur OTA comprend :
la réception, par le dispositif terminal, d'un message de réponse envoyé par le dispositif de gestion ; et
si le message de réponse comprend les informations de version du progiciel de mise à niveau de logiciel système cible, la détermination que les informations d'autorisation correspondant aux informations de version du progiciel de mise à niveau de logiciel système cible indiquent que le dispositif terminal est autorisé à obtenir le progiciel de mise à niveau de logiciel système cible à partir du serveur OTA.

3. Procédé selon la revendication 1 ou la revendication 2, dans lequel la demande, par le dispositif terminal à un dispositif de gestion, d'informations d'autorisation correspondant aux informations de version du progiciel de mise à niveau de logiciel système cible comprend :
l'envoi, par le dispositif terminal, d'un message de demande d'interrogation au dispositif de gestion, dans lequel le message de demande d'interrogation comprend les informations de version du progiciel de mise à niveau de logiciel système cible.

4. Procédé selon l'une quelconque des revendications 1 à 3, dans lequel la détermination, par le dispositif terminal en réponse aux informations d'autorisation qui sont reçues du dispositif de gestion et qui correspondent aux informations de version du progiciel de mise à niveau de logiciel système cible, que le progiciel de mise à niveau de logiciel système cible peut être obtenu à partir du serveur OTA, et l'obtention du progiciel de mise à niveau de logiciel système cible comprend :
si le dispositif terminal détermine, en réponse aux informations d'autorisation qui sont reçues du dispositif de gestion et qui correspondent aux informations de version du progiciel de mise à niveau de logiciel système cible, que les informations d'autorisation indiquent que le dispositif terminal est autorisé à obtenir le progiciel de mise à niveau de logiciel système cible à partir du serveur OTA, la détermination, par le dispositif terminal, que le progiciel de mise à niveau de logiciel système cible peut être obtenu à partir du serveur OTA, et l'obtention du progiciel de mise à niveau de logiciel système cible à partir du serveur OTA ; ou
si le dispositif terminal détermine, en réponse aux informations d'autorisation qui sont reçues du dispositif de gestion et qui correspondent aux informations de version du progiciel de mise à niveau de logiciel système cible, que les informations d'autorisation indiquent que le dispositif terminal n'est pas autorisé à obtenir le progiciel de mise à niveau de logiciel système cible à partir du serveur OTA, la détermination, par le dispositif terminal, que le progiciel de mise à niveau de logiciel système cible ne peut pas être obtenu à partir du serveur OTA, et la détermination qu'une procédure de mise à niveau OTA se termine.

5. Procédé selon l'une quelconque des revendications 1 à 4, dans lequel avant la demande, par le dispositif terminal à un dispositif de gestion, d'informations d'autorisation correspondant aux informations de version du progiciel de mise à niveau de logiciel système cible, le procédé comprend également :
la demande, par le dispositif terminal au dispositif de gestion, de rejoindre un groupe géré par le dispositif de gestion.

6. Procédé selon la revendication 5, dans lequel la demande, par le dispositif terminal au dispositif de gestion, de rejoindre un groupe géré par le dispositif de gestion comprend :
l'envoi, par le dispositif terminal, d'informations d'identification du dispositif terminal au dispositif de gestion ; et
si un message d'accusé de réception envoyé par le dispositif de gestion est reçu, la détermination, par le dispositif terminal, que le dispositif terminal a rejoint le groupe.

7. Dispositif terminal (400), comprenant :
une mémoire (403) et un processeur (401), dans lequel la mémoire (403) est couplée au processeur (401) ; et
la mémoire (403) stocke des instructions de programme ; et
lorsque les instructions de programme sont exécutées par le processeur (401), le dispositif terminal est activé pour exécuter les étapes suivantes :
l'accès à un serveur OTA, et l'obtention d'informations de version d'un progiciel de mise à niveau de logiciel système cible qui se trouve sur le serveur OTA et dont la version est ultérieure à une version de logiciel système actuelle du dispositif terminal ;
la demande, à un dispositif de gestion, d'informations d'autorisation correspondant aux informations de version du progiciel de mise à niveau de logiciel système cible ; et
la détermination, en réponse aux informations d'autorisation qui sont reçues du dispositif de gestion et qui correspondent aux informations de version du progiciel de mise à niveau de logiciel système cible, que le progiciel de mise à niveau de logiciel système cible peut être obtenu à partir du serveur OTA, et l'obtention du progiciel de mise à niveau de logiciel système cible à partir du serveur OTA, dans lequel les informations d'autorisation indiquent si le dispositif terminal est autorisé à obtenir le progiciel de mise à niveau de logiciel système cible à partir du serveur OTA,
dans lequel lorsque les instructions de programme sont exécutées par le processeur, le dispositif terminal est activé pour exécuter les étapes suivantes :
la réception des informations d'autorisation qui sont envoyées par le dispositif de gestion et qui correspondent aux informations de version du progiciel de mise à niveau de logiciel système cible ; et
si les informations d'autorisation comprennent une marque de disponibilité, la détermination que les informations d'autorisation correspondant aux informations de version du progiciel de mise à niveau de logiciel système cible indiquent que le dispositif terminal est autorisé à obtenir le progiciel de mise à niveau de logiciel système cible à partir du serveur OTA ; ou
dans lequel lorsque les instructions de programme sont exécutées par le processeur, le dispositif terminal est activé pour exécuter les étapes suivantes :
la réception d'informations de version d'au moins un progiciel de mise à niveau de logiciel système et d'informations d'autorisation correspondant aux informations de version de l'au moins un progiciel de mise à niveau de logiciel système qui sont envoyées par le dispositif de gestion ;
la mise en correspondance des informations de version du progiciel de mise à niveau de logiciel système cible avec les informations de version de l'au moins un progiciel de mise à niveau de logiciel système, et la détermination d'informations d'autorisation correspondant à des informations de version mises en correspondance avec succès d'un progiciel de mise à niveau de logiciel système ; et
si les informations d'autorisation comprennent une marque de disponibilité, la détermination que les informations d'autorisation correspondant aux informations de version du progiciel de mise à niveau de logiciel système cible indiquent que le dispositif terminal est autorisé à obtenir le progiciel de mise à niveau de logiciel système cible à partir du serveur OTA.

8. Dispositif terminal selon la revendication 7, dans lequel lorsque les instructions de programme sont exécutées par le processeur, le dispositif terminal est activé pour exécuter les étapes suivantes :
la réception d'un message de réponse envoyé par le dispositif de gestion ; et
si le message de réponse comprend les informations de version du progiciel de mise à niveau de logiciel système cible, la détermination que les informations d'autorisation correspondant aux informations de version du progiciel de mise à niveau de logiciel système cible indiquent que le dispositif terminal est autorisé à obtenir le progiciel de mise à niveau de logiciel système cible à partir du serveur OTA.

9. Dispositif terminal selon la revendication 7 ou la revendication 8, dans lequel lorsque les instructions de programme sont exécutées par le processeur, le dispositif terminal est activé pour exécuter les étapes suivantes :
l'envoi d'un message de demande d'interrogation au dispositif de gestion, dans lequel le message de demande d'interrogation comprend les informations de version du progiciel de mise à niveau de logiciel système cible.

10. Dispositif terminal selon l'une quelconque des revendications 7 à 9, dans lequel lorsque les instructions de programme sont exécutées par le processeur, le dispositif terminal est activé pour exécuter les étapes suivantes :
s'il est déterminé, en réponse aux informations d'autorisation qui sont reçues du dispositif de gestion et qui correspondent aux informations de version du progiciel de mise à niveau de logiciel système cible, que les informations d'autorisation indiquent que le dispositif terminal est autorisé à obtenir le progiciel de mise à niveau de logiciel système cible à partir du serveur OTA, la détermination que le progiciel de mise à niveau de logiciel système cible peut être obtenu à partir du serveur OTA, et l'obtention du progiciel de mise à niveau de logiciel système cible à partir du serveur OTA ; ou
s'il est déterminé, en réponse aux informations d'autorisation qui sont reçues du dispositif de gestion et qui correspondent aux informations de version du progiciel de mise à niveau de logiciel système cible, que les informations d'autorisation indiquent que le dispositif terminal n'est pas autorisé à obtenir le progiciel de mise à niveau de logiciel système cible à partir du serveur OTA, la détermination que le progiciel de mise à niveau de logiciel système cible ne peut pas être obtenu à partir du serveur OTA, et la détermination qu'une procédure de mise à niveau OTA se termine.

11. Dispositif terminal selon l'une quelconque des revendications 7 à 10, dans lequel lorsque les instructions de programme sont exécutées par le processeur, le dispositif terminal est activé pour exécuter les étapes suivantes :
la demande, du dispositif de gestion, de rejoindre un groupe géré par le dispositif de gestion.

12. Support de stockage lisible par ordinateur, dans lequel le support de stockage lisible par ordinateur stocke un programme informatique, et le support de stockage lisible par ordinateur est exécuté par un terminal, pour commander le terminal afin d'exécuter le procédé selon l'une quelconque des revendications 1 à 6.

13. Produit de programme informatique comprenant des instructions, dans lequel lorsque le produit de programme informatique est exécuté sur un dispositif électronique, le dispositif électronique est activé pour exécuter le procédé selon l'une quelconque des revendications 1 à 6.
